# EUROPEAN PATENT SPECIFICATION

(11) **EP 1 208 167 B1**
(45) Date of publication and mention of the grant of the patent: **30.07.2003**
(21) Application number: 00934948.1
(22) Date of filing: 09.06.2000
(51) Int. Cl.: C09D 5/16, C09D 143/04

(54) **SELF-POLISHING MARINE ANTIFOULING PAINT COMPOSITION COMPRISING SILICON-CONTAINING CO-POLYMERS AND FIBRES**
SELBSTPOLIERENDE ANWUCHSVERHINDERNDE ANSTRICHFARBE FÜR WASSERFAHRZEUGE - MIT SILIZIUM ENTHALTENDEDN COPOLYMEREN UND FASERN
COMPOSITION DE PEINTURE ANTISALISSURES MARINE AUTOPOLISSANTE COMPRENANT DES COPOLYMERES QUI CONTIENNENT DU SILICIUM ET DES FIBRES

(30) Priority: 11.06.1999 DK 83099
(43) Date of publication of application: 29.05.2002
(73) Proprietor: J.C. HEMPEL'S SKIBSFARVE-FABRIK A/S, 2800 Lyngby (DK)
(72) Inventor: CODOLAR, Santiago, Arias, E-08015 Barcelona (ES); ELBRO, Helle, Simon, DK-2860 Soborg (DK); PEDERSEN, Michael, Stanley, DK-2000 Frederiksberg (DK); GLADWIN, Tim, Scott, DK-1904 Frederiksberg C (DK); BUCHWALD, Frants, 4583 Sjaellands Odde (DK)
(74) Representative: Plougmann & Vingtoft A/S
(86) International application number: DK0000313
(87) International publication number: WO00077102

(56) References cited:
- EP-A1- 0 646 630
- EP-A2- 0 297 505
- WO-A2-96/15198
- GB-A- 2 084 167
- US-A- 5 795 374

## Description

### FIELD OF THE INVENTION

The present invention relates to antifouling paints having the ability to prevent unwanted fouling organisms from attaching and growing on immersed structures that come in contact with water, especially sea water. The present invention provides improved properties of such antifouling paint by incorporation of specific types of fibres.

### BACKGROUND OF THE INVENTION

On underwater structures and on ship's hulls which are exposed to sea and/or fresh water, attachment and growth of marine organisms cause severe economic losses because of the increased friction (and therefore increased consumption of fuel), or increased resistance to waves or currents (for static structures such as off-shore rigs), and because of decreased possible operation time.

An antifouling paint technology which has been investigated over the last decades, is the use of self-polishing antifouling paint compositions in which the polymer of the binder system is a trialkyltin derivative of a polymer containing carboxylic acid groups in the monomer segments, the trialkyltin groups being situated on the carboxylic acid groups. However, the increasing problem of pollution with tin compounds in, e.g., harbours has led to intensive research efforts to provide tin-free self-polishing antifouling paints.

The search for binder systems for tin-free self-polishing antifouling paints, on the one hand having inherent self-polishing properties and exhibiting good capabilities for incorporation of biologically active agents, and on the other hand being able to convey a good mechanical strength of the paint film, has so far been a difficult task.

One way of obtaining binder systems for antifouling paints, such as for tin-free self-polishing antifouling paints, is to employ large amounts of rosin or rosin equivalents as part of the binder system. However, incorporation of large amounts of rosin and rosin equivalent leads to major mechanical weaknesses which were believed to be prohibitive for full exploitation of rosin-based paints. However, improvements to this technology have, e.g., been described in the applicant's previous applications WO 96/15198 and WO 97/44401. These applications describe solutions to the problems relating to the prohibitive inherent mechanical deficiencies of particularly rosin-containing paints. The technology disclosed in the applicant's previous applications illustrates a way of counteracting the mechanical deficiencies of inherently weak paint compositions which would otherwise be unsuitable for high performance utility.

Another interesting (tin-free) paint technology which has been pursued with a certain success is self-polishing antifouling paint based on silylated acrylate binders. This technology is *inter alia* described in US 4,593,055, WO 91/14743, US 5,795,374, EP 646 630 B1, EP 714 957 A1, EP 0 297 505 B1 and EP 775 733 A1.

Although some products based on the above patents and patent applications have already reached the market, it is noted that the integrity of paints based on silylated acrylate binders appears to be affected after use for a longer period of time, especially at the water line of a ship where cycles of sea-water exposure and sun light will induce a significant mechanical stress often resulting in cracking and flake formation.

Even though the mechanical properties of the known silylated acrylate-based paints appear to be fully sufficient right after application to the surface of, e.g., a ship (and for a shorter period thereafter), the long term exposure under operation of a vessel coated with the paint, in particular exposure to alternate cycles of sea-water and sunlight may, as it has been illustrated in the examples disclosed herein, induce certain deficiencies. This problem is particularly relevant for self-polishing paint where a certain degree of water absorption occurs when a coat of the paint is submerged in sea-water. Absorption of water causes the paint film to become slightly swollen and when the paint subsequently is dried out, the paint film will again reduce in thickness. EP 0 775 733 A1 addresses the problem of such mechanical deficiencies and proposes silylated acrylate-based antifouling paints modified by inclusion of a chlorinated paraffin. The composition may furthermore include a flake pigment (e.g. mica powder).

### SUMMARY OF THE INVENTION

Thus, underlying problem for the present invention is to provide alternative self-polishing antifouling paint compositions which preserves the long term integrity after application to a surface intended for exposure to marine environments.

Thus, the present invention relates to a self-polishing marine antifouling paint composition comprising:
i) at least one binder co-polymer comprising at least one side chain bearing at least one terminal group of formula I 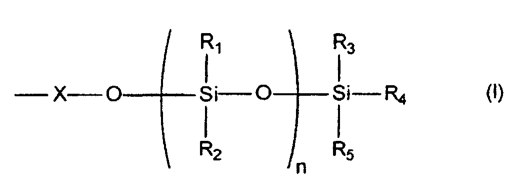 wherein R₁, R₂, R₃, R₄ and R₅ are each independently selected from the group consisting of optionally substituted C₁₋₂₀-alkyl, optionally substituted C₁₋₂₀-alkoxy, optionally substituted aryl and optionally substituted aryloxy; X is >C(=O); and n is 0 or an integer of 1 or more; and
ii) fibres.

### DETAILED DESCRIPTION OF THE INVENTION

It has now been found that self-polishing antifouling paints comprising polymers of the type specified herein and which seem to possess certain apparent deficiencies under conditions corresponding to the long term exposure to weathering, i.e. the conditions described in the "Blister Box Test" and the "Rotor Test" herein, can be improved by the incorporation of fibres.

The "Blister Box Test" is performed in order to simulate the waterline area where the paint system is exposed to repeated wet/dry cycles. The test period of 8 week will often correspond to the expected operation time for a vessel. However due to the increasing demands for even longer operation periods before repainting/recoating, an extended "Blister Box Test" run for 16 weeks may also be relevant when evaluation a paint in relation to the highest expectations. If the ship is fully loaded the majority of the antifouling paint coat is immersed in water. On the other hand, when the ship is only partly loaded a significant area of the antifouling paint coat is exposed to air/sun. Due to the fact that an antifouling paint always absorbs some amount of water, the paint increases in volume when immersed in water (due to water uptake) and decreases in volume (due to water release) when exposed to air. Repeated cycles of increase/decrease in paint volume implies that the paint is exposed to a very hard mechanical stress.

The "Rotor Test" is performed in order to simulated the long term operation of a vessel carrying the paint. The periods of 6, 8, 10 and 12 months correspond to various stages of the expected operation of a vessel.

In the present context, the term "C₁₋₂₀-alkyl" is intended to cover straight, branched or cyclic hydrocarbon groups having from 1 to 20 carbon atoms, such as methyl, ethyl, propyl, *iso*-propyl, n-butyl, *iso*-butyl, *sec*-butyl, *tert*-butyl, pentyl, hexyl, cyclohexyl, heptyl, octyl, nonyl, decyl, undecyl, dodecyl, tertadecyl, hexadecyl, octadecyl and icosyl. Other shorter alkyl groups such as C₁₋₁₂-, C₁₋₁₀-, C₁₋₆-, C₁₋₅- and C₁₋₄-alkyl have similar meanings corresponding to the respective lower number of carbon atoms.

When used herein, the term "C₁₋₂₀-alkoxy" means C₁₋₂₀-alkyl oxy, such as methoxy, ethoxy, propoxy, *iso*-propoxy, n-butoxy, *iso*-butoxy, *sec*-butoxy, *tert*-butoxy, pentoxy, hexoxy, cyclohexoxy, heptoxy, octoxy, nonoxy, decoxy, undecoxy, dodecoxy, tertadecoxy, hexadecoxy, octadecoxy and ocosoxy. Other shorter alkyl groups such as C₁₋₁₂-, C₁₋₁₀-, C₁₋₆-, C₁₋₅- and C₁₋₄-alkoxy have similar meanings corresponding to the respective lower number of carbon atoms.

In the present context the term "aryl" means an aromatic carbocyclic ring or ring system, such as phenyl, naphthyl, biphenyl, xylyl, among which phenyl and naphthyl are preferred examples.

A preferred example of an "aryloxy" group is phenoxy.

The terms "optionally substituted C₁₋₂₀-alkyl", "optionally substituted C₁₋₂₀-alkoxy", "optionally substituted aryl" or "optionally substituted aryloxy" and similar expressions, when used herein, means that the alkyl group, the alkoxy group, the aryl group or the aryloxy group in question may be optionally substituted one or several times, preferably 1-5 times, with substituents selected from the group consisting of hydroxy (which when bound to an unsaturated carbon atom may be present in the tautomeric keto form), C₁₋₂₀-alkyl (only for aryl and aryloxy), hydroxy(C₁₋₁₀-alkyl) (only for aryl and aryloxy), C₁₋₁₀-alkylcarbonyloxy, carboxy, C₁₋₁₀-alkoxycarbonyl, C₁₋₁₀-alkoxy, C₂₋₁₀-alkenyloxy, oxo (forming a keto or aldehyde functionality), C₁₋₁₀-alkylcarbonyl, aryl, amino, mono-, di- and tri(C₁₋₁₀-alkyl)amino, carbamoyl, mono-, di- and tri(C₁₋₁₀-alkyl)aminocarbonyl, amino-C₁₋₁₀-alkylaminocarbonyl, mono-, di- and tri(C₁₋₁₀-alkyl)amino-C₁₋₁₀-alkylaminocarbonyl, C₁₋₁₀-alkylcarbonylamino, cyano, guanidino, carbamido, C₁₋₁₀-alkanoyloxy, sulphono, C₁₋₁₀-alkylsulphonyloxy, nitro, sulphanyl, C₁₋₁₀-alkylthio and halogen.

In the present context, the term "halogen" means flourine, chlorine, bromine or iodine.

In one interesting embodiment of the invention the co-polymer to be used in the self-polishing paint composition according to the invention comprises at least one side chain bearing at least one terminal group of the general formula I: 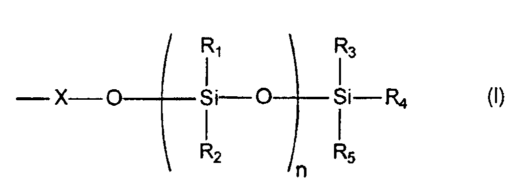 wherein n is an integer of 1 or more and X, R₁, R₂, R₃, R₄ and R₅ are as defined above.

While n is an integer of 1, 2, 3, 4 or more, it is in these cases preferred that n is up to about 5,000, such as 1-50 such as 2-15. R₁-R₅ are each groups selected from the group consisting of C₁₋₂₀-alkyl, C₁₋₂₀-alkoxy, phenyl, optionally substituted phenyl, phenoxy and optionally substituted phenoxy. With respect to the above formula I it is generally preferred that each of the alkyl and alkoxy groups has up to about 5 carbon atoms (C₁₋₅-alkyl). Illustrative examples of substituents for the substituted phenyl and phenoxy groups include halogen, C₁₋₅-alkyl , C₁₋₅-alkoxy or C₁₋₁₀-alkylcarbonyl. As indicated above, R₁-R₅ may be the same or different groups.

Monomers comprising the terminal groups of the general formula I above may be synthesised as described in EP 0 297 505 B1, i.e. the monomers may, for example, be synthesised by condensation, such as e.g. dehydrocondensation of e.g. acrylic acid, methacrylic acid or a maleic acid monoester with an organosilyl compound having R₃-R₅ in its molecule, such as an organosiloxane having a di-substituted monohydroxysilane group at one terminal, a tri-substituted monohydroxysilane, an organosiloxane having a hydroxymethyl group or a halogen methyl group, such as a chloro methyl group, at one terminal, or a tri-substituted silane.

Such monomers may be co-polymerised (in order to obtain the co-polymer to be used in the self-polishing paint composition according to the invention) with a vinyl polymerisable monomer A. Examples of suitable vinyl polymerisable monomers include methacrylate esters such as methyl methacrylate, ethyl methacrylate, butyl methacrylate, 2-ethylhexyl methacrylate, 2-hydroxyethyl methacrylate and methoxy ethyl methacrylate; acrylate esters such as ethyl acrylate, butyl acrylate, 2 ethylhexyl acrylate and 2-hydroxyethyl acrylate; maleic acid esters such as dimethyl maleate and diethyl maleate; fumaric acid esters such as dimethyl fumarate and diethyl fumarate; styrene, vinyltoluene, α-methyl-styrene, vinyl chloride, vinyl acetate, butadiene, acrylamide, acrylonitrile, methacrylic acid, acrylic acid, isobornyl methacrylate and maleic acid.

These vinyl polymerisable monomers (A) act as modifying components that impart desirable properties to resulting co-polymer. These polymers are also useful for the purpose of obtaining polymers that have higher molecular weights than the homopolymers made up of monomers comprising the terminal group of the general formula II and III (below). The amount of vinyl polymerisable monomers is not more than 95% by weight of the total weight of the resulting co-polymer, preferably not more than 90% by weight. Accordingly, the amount of monomers comprising the terminal groups of the general formula I above is at least 5% by weight, in particular at least 10% by weight.

The co-polymers comprising at least one side chain bearing at least one terminal group of the general formula I (shown above) may be formed by polymerising at least one monomer comprising a terminal group of the general formula I with one or more of the vinyl polymerisable monomers (A) above in the presence of a suitable (vinyl) polymerisation initiator in accordance with routine procedures. Methods of polymerisation include solution polymerisation, bulk polymerisation, emulsion polymerisation, suspension polymerisation, anionic polymerisation and co-ordination polymerisation. Examples of suitable vinyl polymerisation initiators are azo compounds such as azobisisobutyronitrile and triphenylmethylazobenzene, and peroxides such as benzoyl peroxide and di-*tert*-butyl peroxide.

The co-polymers to be prepared by the methods described above preferably have weight average molecular weights in the range of 1,000-1,500,000, such as in the range of 5,000-1,500,000, e.g. in the range of 5,000-1,000,000, in the range of 5,000-500,000, in the range of 5,000-250,000, or in the range of 5,000-100,000. If the molecular weight of the co-polymer is too low, it is difficult to form a rigid, uniform and durable film. If, on the other hand, the molecular weight of the co-polymer is too high, it makes the varnish highly viscous. Such a high viscosity varnish should be thinned with a solvent for formulation of a paint. Therefore, the resin solids content of the paint is reduced and only a thin dry film can be formed by a single application. This is inconvenient in that several applications of paints are necessary to attain proper dry film thickness.

Although a number of different methods for determining the weight average molecular weight of the polymer in question will be known to the person skilled in the art, it is preferred that the weight average molecular weight is determined in accordance with the GPC-method described at page 34 in WO 97/44401.

In another interesting embodiment of the invention the co-polymer to be used in the self-polishing paint composition according to the invention comprises at least one side chain bearing at least one terminal group of the general formula II: 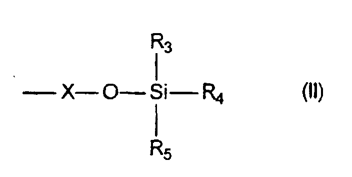 wherein X, R₃, R₄ and R₅ are as defined above.

Examples of monomers having a terminal group of the general formula II (shown above) are acid functional vinyl polymerisable monomers, such as monomers derived from acrylic acid, methacylic acid, maleic acid (preferably in the form of a monoalkyl ester with 1-6 carbon atoms) or fumaric acid (preferably in the form of a monalkyl ester with 1-6 carbon atoms).

With respect to the triorganosilyl group, i.e. the -Si(R₃)(R₄)(R₅) group, shown in the above formulae I or II, R₃, R₄ and R₅ may be the same or different, such as C₁₋₂₀-alkyl (e.g. methyl, ethyl, propyl, butyl, cycloalkyl such as cyclohexyl and substituted cyclohexyl); aryl (e.g., phenyl and naphthyl) or substituted aryl (e.g., substituted phenyl and substituted naphthyl). Examples of substituents for aryl are halogen, C₁₋₁₈-alkyl , C₁₋₁₀-acyl, sulphonyl , nitro, or amino.

Thus, specific examples of a suitable triorganosilyl group (i.e. the -Si(R₃)(R₄)(R₅) group) shown in the general formula I or II include trimethylsilyl, triethylsilyl, tri-n-propylsilyl, tri-n-butylsilyl, tri-*iso*-propylsilyl, tri-n-pentytsilyl, tri-n-hexylsilyl, tri-n-octylsilyl, tri-n-dodecylsilyl, triphenylsilyl, tri-p-methylphenylsilyl, tribenzylsilyl, tri-2-methylisopropylsilyl, tri-*tert*-butylsilyl, ethyldimethylsilyl, n-butyldimethylsilyl, di-*iso*-propyl-n-butylsilyl, n-octyl-di-n-butylsilyl, di-*iso*-propryloctadecylsilyl, dicyclohexylphenylsilyl, *tert*-butyldiphenylsilyl, dodecyldiphenylsilyl and diphenylmethylsilyl.

Specific examples of suitable methacrylic acid-derived monomers bearing at least one terminal group of the general formula I or II include trimethylsilyl (meth)acrylate, triethylsilyl(meth)acrylate, tri-n-propylsilyl(meth)acrylate, triisopropylsilyl (meth)acrylate, tri-n-butylsilyl (meth)acrylate, triisobutylsilyl (meth)acrylate, tri-tert-butylsilyl(meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)-acrylate, tribenzylsilyl (meth)acrylate, ethyldimethylsilyl (meth)acrylate, n-butyldimethylsilyl (meth)acrylate, diisopropyl-n-butylsilyl (meth)acrylate, n-octyldi-n-butylsilyl (methacrylate, diisopropylstearylsilyl (meth)acrylate, dicyclohexylphenylsilyl (meth)acrylate, t-butyldiphenylsilyl (meth)acrylate, and lauryldiphenylsilyl (meth)acrylate.

Specific examples of suitable maleic acid-derived and fumaric acid-derived monomers bearing at least one terminal group of the general formula I or II include triisopropylsilyl methyl maleate, triisopropylsilyl amyl maleate, tri-n-butylsityl n-butyl maleate, *tert*-butyldiphenylsilyl methyl maleate, t-butyldiphenylsilyl n-butyl maleate, triisopropylsilyl methyl fumarate, triisopropylsilyl amyl fumarate, tri-n-butylsilyl n-butyl fumarate, *tert*-butyldiphenylsilyl methyl fumarate, and *tert*-butyldiphenylsilyl n-butyl fumarate.

In an interesting embodiment of the present invention, the co-polymer to be used in the self-polishing paint composition according to the invention comprises monomer units with a terminal group of the general formula II (as discussed above) in combination with a second monomer B of the general formula III:

Y-(CH(R_{A})-CH(R_{B})-O)ₚ-Z (III)

wherein Z is a C₁₋₂₀-alkyl group or an aryl group; Y is an acryloyloxy group, a methacryloyloxy group, a maleinoyloxy group or a fumaroyloxy group; R_{A} and R_{B} are independently selected from the group consisting of hydrogen, C₁₋₂₀-alkyl and aryl; and p is an integer of 1 to 25.

If p> 2, R_{A} and R_{B} are preferably hydrogen or CH₃, i.e. if p>2 the monomer B is preferably derived from a polyethylene glycol or a polypropylene glycol.

If p=1 it is contemplated that monomers, wherein R_{A} and R_{B} are larger groups, such as C₁₋₂₀-alkyl or aryl, may also be useful for the purposes described herein.

As shown in formula III, monomer B has in its molecule an acryloyloxy group, a methacryloyloxy group, a maleinoyloxy group (preferably in the form of a mono-C₁₋₆-alkyl ester), or a fumaroyloxy group (preferably in the form of a mono-C₁₋₆-alkyl ester ) as an unsaturated group (Y) and also alkoxy- or aryloxypolyethylene glycol.ln the alkoxy- or aryloxypolyethylene glycol group, the degree of polymerisation (p) of the polyethylene glycol is from 1 to 25.

Examples of the alkyl or aryl group (Z) include C₁₋₁₂-alkyl (e.g., methyl, ethyl, propyl, butyl, cycloalkyl such as cyclohexyl and substituted cyclohexyl); and aryl (e.g., phenyl and naphthyl) and substituted aryl (e.g., substituted phenyl and substituted naphthyl). Examples of substituents for aryl include halogen, C₁₋₁₈-alkyl group , C₁₋₁₀-alkylcarbonyl, nitro, or amino.

Specific examples of monomer B which has a (meth)acryloyloxy group in a molecule include methoxyethyl (meth)acrylate, ethoxyethyl (meth)acrylate, propoxyethyl (meth)-acrylate, butoxyethyl (meth)acrylate, hexoxyethyl (meth)acrylate, methoxydiethylene glycol (meth)acrylate, methoxytriethylene glycol (meth)acrylate, ethoxydiethylene glycol (meth)acrylate, and ethoxytriethylene glycol (meth)acrylate.

Specific examples of monomer B which has a maleinoyloxy or fumaroyloxy group in a molecule include methoxyethyl n-butyl maleate, ethoxydiethylene glycol methyl maleate, ethoxytriethylene glycol methyl maleate, propoxydiethylene glycol methyl maleate, butoxyethyl methyl maleate, hexoxyethyl methyl maleate, methoxyethyl n-butyl fumarate, ethoxydiethylene glycol methyl fumarate, ethoxytriethylene glycol methyl fumarate, propoxydiethylene glycol methyl fumarate, butoxyethyl methyl fumarate, and hexoxyethyl methyl fumarate.

As will be understood by the person skilled in the art, other vinyl monomers may be incorporated in the resulting co-polymer comprising either monomer units having a terminal group of the general formula II (shown above) or in the resulting co-polymer comprising monomer units having a terminal group of the general formula II (shown above) in combination with the second monomer B of the formula III (shown above).

With respect to other monomers co-polymerisable with the above-mentioned monomers, use may be made of various vinyl monomers such as the vinyl polymerisable monomers (A) discussed above.

In the monomer mixture, the proportions of monomer having a terminal group of the general formula II, monomer B and other monomer(s) co-polymerisable therewith (e.g. monomer A) may be suitably determined depending on the use of the coating composition. In general, however, it is preferred that the proportion of the monomer having a terminal group of the general formula II is from 1-95% by weight, that of monomer B is from 1-95% by weight, and that of other monomer(s) co-polymerisable therewith is from 0-95% by weight on the basis of the total weight of the monomers.

Thus, co-polymers comprising a combination of monomer units bearing a terminal group of the general formula II and monomer units B (and optionally monomer A) can be obtained by polymerising such monomer mixtures in the presence of a vinyl polymerisation initiator by any of various methods such as solution polymerisation, bulk polymerisation, emulsion polymerisation, and suspension polymerisation in an ordinary way, which will be known to the person skilled in polymer chemistry. It is preferred, however, to employ the solution polymerisation method or the bulk polymerisation method.

Examples of the vinyl polymerisation initiators include azo compounds such as azobis-isobutyronitrile and triphenylmethylazobenzene; and peroxides such as benzoyl peroxide, di-*tert*-butyl peroxide, *tert*-butyl peroxybenzoate, and *tert*-butyl peroxyisopropylcarbonate.

The molecular weight of the resulting co-polymer thus obtained is desirably in the range of 1,000-150,000, such as in the range of 3,000-100,000, e.g. in the range of 5,000-100,000 in terms of weight-average molecular weight. Too low molecular weights result in difficulties in forming normal coating film, while too high molecular weights result in disadvantages that a single coating operation only gives thin coating film and, hence, coating operations should be conducted in a larger number. It is preferred to regulate the solid content of the polymer solution to a value in the range of 5-90% by weight, desirably from 15-85% by weight.

In a further interesting embodiment of the present invention, the co-polymer to be used in the self-polishing paint composition according to the invention comprises monomer units with a terminal group of the general formula II (as discussed above) in combination with a second monomer C of the general formula IV: 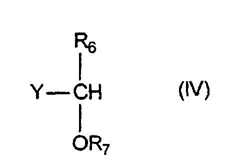 wherein Y is an acryloyloxy group, a methacryloyloxy group, a maleinoyloxy group or a fumaroyloxy group, and both of R₆ and R₇ are C₁₋₁₂-alkyl.

As shown in formula IV, monomer C has in its molecule an acryloyloxy group, a methacryloyloxy group, a maleinoyloxy group (preferably in the form of a mono-C₁₋₆-alkyl ester), or a fumaroyloxy group (preferably in the form of a mono-C₁₋₆-alkyl ester) as an unsaturated group (Y) and also a hemi-acetal group.

In the hemi-acetal group, examples of R₆ include C₁₋₁₂-alkyl, preferably C₁₋₄-alkyl (e.g., methyl, ethyl, n-propyl, n-butyl, isopropyl, isobutyl, and *tert*-butyl); and examples of R₇ include C₁₋₁₂-alkyl, preferably C₁₋₈-alkyl (e.g., methyl, ethyl, n-propyl, isopropyl, n-butyl, isobutyl, and *tert*-butyl), and a substituted or unsubstituted C₅₋₈-cycloalkyl (e.g., cyclohexyl).

Monomer C can be prepared by an ordinary addition reaction of a carboxy group-containing vinyl monomer selected from acrylic acid, methacrylic acid, maleic acid (or monoester thereof), and fumaric acid (or monoester thereof), with an alkyl vinyl ether (e.g., ethyl vinyl ether, propyl vinyl ether, butyl vinyl ether, hexyl vinyl ether, and 2-ethylhexyl vinyl ether), or a cycloalkyl vinyl ether (e.g., cyclohexyl vinyl ether).

As will be understood by the person skilled in the art, other vinyl monomers may be incorporated in the resulting co-polymer comprising monomer units having a terminal group of the general formula II (shown above) in combination with the second monomer C of the formula IV (shown above).

With respect to other monomers co-polymerisable with the above-mentioned monomers, use may be made of various vinyl monomers such as the vinyl polymerisable monomers (A) discussed above.

In the monomer mixture, the proportions of monomer having a terminal group of the general formula II, monomer C and other monomer(s) co-polymerisable therewith (e.g. monomer A) may be suitably determined depending on the use of the coating composition. In general, however, it is preferred that the proportion of the monomer having a terminal group of the general formula II is from 1-95% by weight (preferably from 1-80% by weight), that of monomer C is from 1-95% by weight (preferably from 1-80% by weight), and that of other monomer(s) co-polymerisable therewith is up to 98% by weight on the basis of the total weight of the monomers.

Thus, co-polymers comprising a combination of monomer units bearing a terminal group of the general formula II and monomer units C (and optionally monomer A) can be obtained by polymerising such monomer mixtures in the presence of a vinyl polymerisation initiator by any of various methods such as solution polymerisation, bulk polymerisation, emulsion polymerisation, and suspension polymerisation in an ordinary way, which will be known to the person skilled in polymer chemistry. It is preferred, however, to employ the solution polymerisation method or the bulk polymerisation method.

Examples of the vinyl polymerisation initiators include azo compounds such as azobisisobutyronitrile and triphenylmethylazobenzene; and peroxides such as benzoyl peroxide, di-*tert*-butyl peroxide, *tert*-butyl peroxybenzoate, and *tert*-butyl peroxyisopropylcarbonate.

The molecular weight of the resulting co-polymer thus obtained is desirably in the range of 1,000-150,000, preferably in the range of 3,000-100,000, such as in the range of 5,000-100,000 in terms of weight-average molecular weight. Too low molecular weights result in difficulties in forming normal coating film, while too high molecular weights result in disadvantages that a single coating operation only gives thin coating film and, hence, coating operations should be conducted in a larger number.

Although it is preferred that the chemistry of the binder co-polymer is as described above, it is contemplated that also other silyl-containing co-polymers having a slight different structure may be useful for the purposes described herein. Thus, an example of a binder co-polymer having a slight different structure compared to the chemistries disclosed above is a binder co-polymer comprising at least one side chain bearing at least one terminal group of formula V 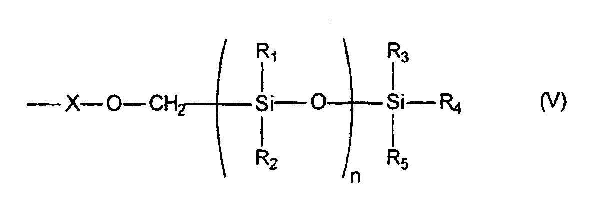 wherein X, n, R₁, R₂, R₃, R₄ and R₅ are as defined above in connection with formula I.

In the present context, the terms "self-polishing" and "polishing" are intended to mean that the coating in question, or the paint when dried up as a coating, under the test conditions described in the Polishing Rate Test herein, is subject to a reduction of the thickness of the coating of at least 1 µm per 10,000 Nautical miles (18,520 km) of relative movement between the coated surface and the surrounding aqueous medium due to removal of coating material from the surface of the coating.

In the present context the term "% by solids volume" is intended to mean the volume/volume percentage of the dry matter of the paint.

It is presently believed that the fibres to be used within the present invention should fulfil certain criteria with respect to dimensions in order to provide the improved properties of the paints within the present invention. Thus, with respect to average length and average thickness of the fibres which are added to the paint during manufacture of the paint, such fibres have an average length of 25-2000 µm and an average thickness of 1-50 µm with a ratio between the average length and the average thickness of at least 5, especially an average length of 25-500 µm and an average thickness of 1-25 µm with a ratio between the average length and the average thickness of at least 10, in particularly an average length of 50-250 µm (such as 50-170 µm) and an average thickness of 2-10 µm with a ratio between the average length and the average thickness of at least 15, such as at least 20.

It should be noted that the term "length" refers to the greatest dimension of the fibre particle in question. The term "average" when used in connection with length indicates that a certain variation of the length of fibres exists within the distribution-of the fibres used. The term "average thickness" also refers to the fibres in question, however with regard to the distribution of fibres also taking into account the longitudinal and cross-sectional variation with each individual fibre.

Generally, "fibres" is intended to cover any fibres within the groups of natural inorganic fibres, synthetic inorganic fibres, natural organic fibres, synthetic organic fibres, and metallic fibres, or mixtures thereof. Without being bound to any specific theory, it is however presently believed that natural inorganic fibres and synthetic inorganic fibres, in particular mineral fibres of these types, are especially preferred.

In order for a certain particle to be considered as a fibre within the present context, the ratio between the greatest dimension and the smallest dimension perpendicular to the length dimension in substantially all points along the longitudinal axis (the length dimension - longest dimension) should not exceed 2.5:1, preferably not exceed 2:1.

Furthermore, the ratio between the longest dimension and the average of the two shortest dimensions should be at least 5:1. Thus, fibres are characterised of having one long dimension and two short dimension, where the long dimension is substantially longer than the two short dimensions (typically by an order of magnitude, or even more), and the two short dimensions are substantially equal (of the same order of magnitude). For completely regular fibres, i.e. fibres having a cylindrical shape, it is evident how to determine the "length" (longest dimension) and the two (identical) shortest dimensions. For more irregular fibres, it is believed that the relationship between the dimensions can be evaluated by the following hypothetical experiment: A regular, right-angled box is constructed around the fibre. The box is constructed so as to have the smallest possible volume as it should fully comprise the fibre. To the extent that the fibre is curved, it is (again hypothetically) assumed that the fibre is flexible so that the volume of the hypothetical box can be minimised by "bending" the fibre. In order for the "fibre" to be recognised as so in the present context, the ratio between the two smallest dimensions of the box should be at the most 2.5:1 (preferably 2:1) and the ratio between the longest dimension of the box and the average of the to smallest dimensions of the box should be at least 5:1.

The above is given as a general guideline in order to exclude other types of particles which may be referred to as "fibres" but which do have less satisfactory properties within the present invention. In particular, the term "fibre" is not intended to include so-called "fibre" materials which are used as fillers (e.g. thixotropic agents and frayed type fillers with no well defined dimensions such as asbestine), cf. Hawley's Condensed Chemical Dictionary, 11^{th} Ed., (Sax and Lewis, eds.), Van Nostrand Reinhold Company, New York, 1987, page 521. Neither does "fibre" include flake type fillers, e.g. mica, cf. the definition above. With respect to "curved" fibres, it should be understood that the length dimension should be considered as the length along the curve defined by the fibre.

Examples of inorganic fibres are carbide fibres such as silicon carbide fibres, boron carbide fibres, niobium carbide fibres; nitride fibres such as silicon nitride fibres; boron containing fibres such as boron fibres, boride fibres; silicon-containing fibres such as silicon fibres, alumina-boron-silica fibres, E-glass (non-alkaline alumoborosilicate) fibres, C-glass (non-alkaline or low-alkaline soda lime-alumoborosilicate) fibres, A-glass (alkaline soda lime-silicate) fibres, S-glass fibres, CEMFIL-glass fibres, ARG-glass fibres, mineral-glass fibres, non-alkaline magnesia alumosilicate fibres, quartz fibres, silicic acid fibres, silica fibres, high-silica fibres, alumina high-silica fibres, alumosilicate fibres, aluminium silicate fibres, magnesia alumosilicate fibres, soda borosilicate fibres, soda silicate fibres, polycarbosilane fibres, polytitanocarbosilane fibres, polysilazane fibres, hydridopolysilazane fibres, tobermorite fibres, samarium silicate fibres, wollastonite fibres, potassium aluminium silicate fibres; metal fibres such as iron fibres, aluminium fibres, bismuth fibres, antimony fibres, wolfram fibres, molybdenum fibres, chrome fibres, copper fibres, germanium fibres, rhodium fibres, beryllium fibres, and metal alloy fibres thereof such as bronze fibres, aluminium-nickel alloy fibres, copper-tin alloy fibres, steel fibres; oxide fibres such as zirconia fibres, alumina fibres, magnesia fibres, zinc oxide fibres, indium oxide fibres, titanium oxide fibres, beryllium oxide fibres, nickel oxide fibres, thorium oxide fibres, yttrium oxide fibres, potassium titanate fibres; carbon fibres such as pure carbon fibres, graphite fibres, slagwool fibres, charcoal fibres; sulphide fibres such as zinc sulphide fibres, cadmium sulphide fibres; phosphate fibres such as hydroxyapatite fibres, calcium hydrogenphosphate (brushite) fibres, neodymium pentaphosphate fibres, and silver phosphate fibres; calcium sulphate fibres; tin iodide fibres; calcium iodate fibres; calcium fluoride fibres; sodium aluminium hydroxycarbonate fibres; rockwool fibres such as pure rockwool fibres and basalt rockwool fibres; processed mineral fibres from mineral wool; volcanic rock fibres; montmorillonite fibres; atapulgite fibres; calcined bauxite fibres; etc.; modified by any chemical or physical processes; and any mixture thereof.

Examples of natural and synthetic organic fibres are aromatic polyamide fibres such as poly(p-benzamide) fibres, poly(p-phenylene-terephthalamide) fibres, poly(p-phenylene-2,6-naphthalamide) fibres, poly(3,4'-diphenylether-terephthalamide) fibres, poly(p-phenylene-(p-benzamide)-terephthalamide) fibres, poly(p-benzhydrazide terephthalamide) fibres, poly(m-phenylene-isophthalamide) fibres, poly(N,N'-m-phenylene-bis(m-benzamide)-terephthalamide) fibres, poly(N,N'-m-phenylene-bis(m-benzamide)-2,6-naphthalamide) fibres, poly(N,N'-m-phenylene-bis(m-benzamide)-4,4'-biphenyl-dicarboxamide) fibres, poly(4,4'-bis(p-aminophenyl)-2,2'-bithiazole-isophthalamide) fibres, poly(2,5-bis(p-aminophenyl)-1,3,4-oxa-diazole-isophthalamide) fibres, poly(4,4'-diaminobenzanilide-isophthalamide) fibres, poly(2-methyl-p-phenylene-2,6-naphthalamide) fibres, poly(2,6-dichloro-p-phenylene-2,6-naphthalamide) fibres; aromatic polyhydrazide fibres such as poly(terephthalic-m-phenylene-hydrazide) fibres, poly(terephthalic-hydrazide) fibres, poly(p-phenylene-N-methyl-hydrazide) fibres; aromatic polyester fibres such as poly(chloro-1,4-phenylene-ethylene-dioxy-4,4'-benzoate-co-terephthalate) fibres, poly(chloro-1,4-phenylene-4,4'-oxydibenzoate) fibres, poly(methyl-1,4-phenylene-4,4'-oxydibenzoate) fibres, poly(chlorophenylene-hexahydroterephthalate) fibres; aromatic polyazomethine fibres such as poly(nitrilo-(2-methyl-1,4-phenylene)nitrilomethylidyne-1,4-phenylenemethylidyne) fibres; aromatic polyimide fibres such as aromatic polypyromellitimide fibres, aromatic polytrimellitimide fibres, polyester-imide fibres, poly(4,4'-diphenyl-ether-pyromellitimide) fibres; aromatic heterocyclic polymeric fibres such as polybenzimidazole fibres such as poly-(2,2'-(m-phenylene)-5,5'-bibenzimidazole) fibres, polybenzothiazole fibres such as poly(2-(1,4-phenylene)-2'-(6,6'-bibenzothiazole)) fibres and poly(2-(1,3-phenylene)-2'-(6,6'-bibenzothiazole)) fibres, polybenzoxazole fibres such as poly((1,7-dihydrobenzo(1,2-d:4,5-d')dioxazole-2,6-diyl)-1,4-phenylene) fibres and poly((benzo(1,2-d:4,5-d')bisoxazol-2,6-diyl)-1,4-phenylene) fibres, polyoxadiazole fibres such as polyarylene-1,3,4-oxadiazole fibres; cellulose fibres such as α-cellulose fibres, β-cellulose fibres, mineral cellulose fibres, methylcellulose fibres, cellucotton fibres, regenerated cellulose (rayon) fibres, cellulose acetate fibres, jute fibres, cotton fibres, linen fibres, ramie fibres, sisal fibres, heme fibres, flax fibres, cyanoethylated cellulose fibres, acetylated cellulose fibres; wood fibres such as pine, spruce and fir wood fibres, lignin fibres and fibres of lignin derivatives; rubber fibres and fibres of derivatives of rubber; polyolefin fibres such as polyethylene fibres, polypropylene fibres, polytetrafluoroethylene fibres, polybutadiene fibres; polyacetylene fibres; polyester fibres; acrylic fibres and modified acrylic fibres such as acrylic acid fibres, styrol/acrylate fibres; acrylonitrile fibres such as acrylonitrile fibres and polyacrylonitrile fibres; elastomeric fibres; protein fibres such as casein fibres, maize protein fibres, soybean protein fibres, groundnut protein fibres; alginate fibres; poly(ethylene terephthalate) fibres; polyvinyl alcohol fibres; aliphatic polyamide fibres such as nylon fibres e.g. nylon 6.6 fibres, nylon 6 fibres, nylon 6.10 fibres; poly(phenylene sulphide) fibres; polyvinylchloride fibres; polychloroethene fibres; poly(bisbenzimidazobenzophenanthrolin) fibres; polyoxymethylene fibres; polyurethane fibres; vinyl polymeric fibres; viscose fibres; etc.; modified by any chemical or physical processes; and any mixture thereof.

It is presently believed that one very interesting group of fibres is inorganic fibres, in particular mineral fibres. Particularly preferred examples of such fibres are silicon-containing fibres; metal fibres; oxide fibres; carbon fibres; rockwool fibres; processed mineral fibres from mineral wool; volcanic rock fibres; wollastonite fibres; montmorillonite fibres; tobermorite fibres; atapulgite fibres; and calcined bauxite fibres.

At present, especially preferred are mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, and processed mineral fibres from mineral wool. Examples of commercially available mineral fibres which are believed to improve the mechanical properties according to the invention are (average fibre length in µm; average fibre thickness in µm):
1. Inorphil 061-10 ex Laxå Bruk AB (Sweden), synthetic mineral fibre (140;4)
2. Inorphil 161-10 ex Laxå Bruk AB (Sweden), synthetic mineral fibre (140;4)
3. Inorphil 361-10 ex Laxå Bruk AB (Sweden), synthetic mineral fibre (140;4)
4. Inorphil 061-20 ex Laxå Bruk AB (Sweden), synthetic mineral fibre (160;4)
5. Inorphil 461-20 ex Laxå Bruk AB (Sweden), synthetic mineral fibre (160;4)
6. Inorphil 061-30 ex Laxå Bruk AB (Sweden), synthetic mineral fibre (200;4)
7. Inorphil 061-60 ex Laxå Bruk AB (Sweden), synthetic mineral fibre (300;4)
8. MS 600 ex Lapinus Fibres BV (The Netherlands), volcanic rock fibre (125;5)
9. P045-MS 600 (or MS600 Roxul 1000) ex Lapinus Fibres BV (The Netherlands), mineral fibre (125;5.5)
10. RF 5104 ex Lapinus Fibres BV (The Netherlands), volcanic rock fibre (125;5)
11. RF 5118 ex Lapinus Fibres BV (The Netherlands), volcanic rock fibre (650;5)
12. FG 400/060 ex Schwarzwälder Textil-Werke (Germany), E-glass (230;9-14)
13. FG 400/300 ex Schwarzwälder Textil-Werke (Germany), E-glass (400;9-14)
14. FG 400/100 ex Schwarzwälder Textil-Werke (Germany), E-glass (250;9-14)
15. FG 440/040 ex Schwarzwälder Textil-Werke (Germany), E-glass (150;9-14)
16. F 550/1 S ex Schwarzwälder Textil-Werke (Germany), mineral glass (500;4.4)
17. F 554/1 SR ex Schwarzwälder Textil-Werke (Germany), rockwool (500;5)
18. F 580/1 S ex Schwarzwälder Textil-Werke (Germany), ceramic (500;2.8)
19. Nyad G ex Nyco Minerals (U.S.A), wollastonite (length/diameter ratio 15:1)
20. Tixal 102 ex Tixal (Germany), C-glass (-;-)
21. Tixal 202 ex Tixal (Germany), C-glass (-;-)
22. RCF-600 ex Sumitomo (Japan), C-glass (820;-)
23. RCF-160 ex Sumitomo (Japan), C-glass (250;-)
24. RCF-140 ex Sumitomo (Japan), C-glass (175;-)
25. RCF-140G ex Sumitomo (Japan), C-glass (175;-)
26. RCF-140N ex Sumitomo (Japan), C-glass (175;-)

Examples of commercially available organic fibres which are believed to improve the mechanical properties according to the invention are (average fibre length in µm; average fibre thickness in µm):
27. F PA 222/040 ex Schwarzwälder Textil-Werke (Germany), polyamide (500;15-30)
28 F PA 240/040 ex Schwarzwälder Textil-Werke (Germany), polyamide (500;15-30)
29 F PA 230/040 ex Schwarzwälder Textil-Werke (Germany), polyamide (500;15-35)
30 F PAC 238/040 ex Schwarzwälder Textil-Werke (Germany), polyacrylonitrile (500;-)
31. F PES 231/040 ex Schwarzwälder Textil-Werke (Germany), polyester/polyamide (500; 10-20)
32. F PP 261/040 ex Schwarzwälder Textil-Werke (Germany), polypropylene (500;21)
33. F PAC O 245/040 ex Schwarzwälder Textil-Werke (Germany), polyacrylonitrile preoxidized (500; 10-12)
34. F 501/050 ex Schwarzwälder Textil-Werke (Germany), jute (500;30-500)
35. Sylothix 51 ex Grace AB (Germany), polyethylene (400;-)
36. Sylothix 52 ex Grace AB (Germany), polyethylene + silica (400;-)
37. Arbocel BE 00 ex J. Rettenmaier & Söhne GmbH + Co. (Germany), cellulose (120;20)
38. Lignocel C 120 ex J. Rettenmaier & Söhne GmbH + Co. (Germany), conifer (70-150;-)
39. Lignocel C 250 A ex J. Rettenmaier & Söhne GmbH + Co. (Germany), conifer (150-250;-)
40. Technocel 300 ex C. F. F. Cellulose-Füllstoff-Fabrik (Germany), cellulose (65% <90;-)
41. Technocel 200 ex C. F. F. Cellulose-Füllstoff-Fabrik (Germany), cellulose (80% <90;-)
42. Technocel 150 DU ex C. F. F. Cellulose-Füllstoff-Fabrik (Germany), cellulose (95% <90;-)
43. Technocel 90 DU ex C. F. F. Cellulose-Füllstoff-Fabrik (Germany), cellulose (65% <32;-)
44. Technocel 400 C ex C. F. F. Cellulose-Füllstoff-Fabrik (Germany), cellulose (-;-)
45. F PP 261/040 ex Schwarzwälder Textil-Werke, polypropylene fibre, white, (500;21)
46. FB1/035 ex Schwarzwälder Textil-Werke, cotton fibre, white, (400;-)
47. F PAC 235/040 ex Schwarzwälder Textil-Werke, polyacrylonitrile fibre, white, (500;-)

It is however also presently believed that some organic fibres can be especially advantageous within the present invention. Particularly preferred examples of such fibres are aromatic polyamide fibres; aromatic polyester fibres; aromatic polyimide fibres; cellulose fibres; cotton fibres; wood fibres; rubber fibres and fibres of derivatives of rubber; polyolefin fibres (e.g. polypropylene fibres); polyacetylene fibres; polyester fibres; acrylic fibres and modified acrylic fibres; acrylonitrile fibres (e.g. preoxidised acrylonitrile fibres); elastomeric fibres; protein fibres; alginate fibres; poly(ethylene terephthalate) fibres; polyvinyl alcohol fibres; aliphatic polyamide fibres; polyvinylchloride fibres; polyurethane fibres; vinyl polymeric fibres; and viscose fibres. Presently even more preferred examples of such fibres are polyethylene fibres, polypropylene fibres, cotton fibres, cellulose fibres, polyacrylonitrile fibres, preoxidised polyacrylonitrile fibres, and polyester fibres.

Although the organic fibres should fulfil essentially the same criteria with respect to average length and average thickness as the inorganic fibres and often fall within the same ranges with respect to preferred average length and average thickness, it is believed that advantageous organic fibres in special embodiments may be considerable longer than indicated above. Thus, in a special embodiment, the organic fibres preferably have an average length of 100-1500 µm and an average thickness of 1-50 µm, such as 1-30 µm, with a ratio between the average length and the average thickness of at least 5, especially an average length of 200-750 µm and an average thickness of 2-15 µm with a ratio between the average length and the average thickness of at least 15.

In view of the above, it is presently believe that a particularly interesting group of fibres (including inorganic as well as organic fibres) is mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, processed mineral fibres from mineral wool, polyethylene fibres, polypropylene fibres, cotton fibres, cellulose fibres, polyacrylonitrile fibres, preoxidised polyacrylonitrile fibres, and polyester fibres.

The surface of the fibres may or may not have been modified (surface treated) by chemical or physical processes. Examples of such modification processes used to improve the beneficial effects of the fibres are carbonisation; silylation; surface oxidation; etching such as treatment with alkalimetal hydroxide, treatment with hydrofluoric acid; coating; polyelectrolytic entrapment in the porous surface structures; adsorption processes; hydrogen-bonding processes; cationic bonding processes; esterification; anionic bonding processes; etc. as well as any modification processes included in the manufacturing of the fibres.

Without being bound to any theory, it is envisaged that the inorganic fibres, in particular the mineral fibres, mentioned above have the most interesting properties with respect to ease of incorporation into the paint (before or after mixing/milling), i.e. the compatibility between the fibres, both in the native form as well as in any surface modified form, and polymer-based binder system is favourable thereby leading to the envisaged improvement of the properties of the paint compositions.

It is presently believed that an especially relevant feature for the fibres to be incorporated in the paints is the ability to biodegrade under physiological conditions, especially in the respiratory organs (the lungs) of mammals, especially humans. Thus, it is believed that especially interesting fibres are those which are able to biodegrade when present in a modified Gamble's solution as defined in WO 96/14454, page 9. The degree of biodegradablity should preferably be at least 20 nm/day, such as at least 30 nm/day, in particular at least 50 nm/day when tested as described in WO 96/14454. Examples of suitable biodegradable fibres are the ones described in WO 96/14454 and WO 96/14274. A specific example thereof is the commercially available P045-MS 600 (or MS600 Roxul 1000) ex Lapinus Fibres BV (see below). The biodegradability is especially relevant for mineral fibres.

In view of the above, it is also envisaged that biodegradable fibres can be advantageously used in a number of other self-polishing antifouling paints such as self-polishing paints having a high content of rosin, e.g. the ones described in WO 97/44401 and WO 96/15198.

The fibres may, as it will be clear from the description of the manufacture processes further below, be added together with the remaining paint constituents before milling or may be added afterwards. It can however be expected that the average length of the fibres will be slightly reduced during the paint manufacture process (see further below), e.g., due to the milling process. (Milling is typically performed in order to break up agglomerates of fibres and other particles in the paint composition). It is believed that the paint manufacture process should be performed so that the fibres in the ready-to-use paint have an average length of 25-2000 µm and an average thickness of 1-50 µm with a ratio between the average length and the average thickness of at least 5, especially an average length of 25-500 µm and an average thickness of 1-25 µm with a ratio between the average length and the average thickness of at least 5, in particularly an average length of 50-250 µm (such as 50-170 µm) and an average thickness of 2-10 µm with a ratio between the average length and the average thickness of at least 5.

The concentration of the fibres is normally in the range of 0.1-25% by solids volume of the paint, such as 0.5-10% by solids volume of the paint. Especially relevant concentrations of fibres, depending upon the type and size of the fibres, may be 2-10%, such as 2-7%, or 3-10%, such as 3-8% by solids volume of the paint.

It should be understood that the above ranges refer to the total amount of fibres, thus, in the case where two or more fibre types are utilised, the combined amounts should fall within the above ranges.

The specific fibres used within the present invention may, in principle, be any fibres which, either in the native form or after surface modification, will improve the properties of an antifouling paint when tested in the Blister Box Test and/or the Rotor Test herein. Preferred fibres according to the invention are those which when incorporated in Model Paint Composition A in an amount of 5% by solids volume and tested in the Blister Box Test or tested for two months in the Rotor Test herein, result in a decrease with respect to "Size of cracks", "Density of cracking", "Flaked area" or "Size of flaking" of at least 1 Ranking Unit Value, preferably at least 2 Ranking Unit Values, such as at least 3 Ranking Unit values, when compared to an identical test performed on the paint without fibres.

Examples of fibres which are particular preferred are such fibres which, when incorporated in the Model Paint Composition A (as described herein) in an amount of 5% by solids volume, and when tested in the Rotor Test for four months, six months, eight months, ten months or even twelve months (as described herein) shows a decrease with respect to "Size of cracks", "Density of cracking", "Flaked area" or "Size of flaking" of at least 1 Ranking Value Unit, preferably at least 2 Ranking Value Units, such as at least 3 Ranking value Units, when compared to an identical test performed on the paint without fibres.

Self-polishing antifouling paints may include biologically active agents (see further below). In this case, self-polishing antifouling paints should be designed to regulate the leaching of biologically active agents by a controlled, and preferably uniform, dissolution of the paint through the entire coating lifetime, usually 2-5 years. The optimal design and performance of self-polishing antifouling paints depend on several variables associated with the ship profile and sailing pattern. Water temperature, fouling intensity, water salinity, dry-docking intervals, speed, and activity are the main factors that influence the paint behaviour. Thus, it should be possible to tailor make antifouling paint having polishing rates in a wide range so that the paint technology is applicable for a number of different vessel types.

Normally a ship operating at low speed with very low activity in an area of a high fouling intensity, *e.g.* a coastal fishing vessel sailing on Singapore, will need a relatively fast self-polishing antifouling paint, *e.g*. having a polishing rate in the range of 10-30 µm per 10,000 Nautical miles, in order to release sufficient amounts of biologically active agents to keep the hull free of fouling. On the other hand a ship operating at high speed with very high activity in an area of a low to moderate fouling intensity, *e.g.* a container ship in Iceland, will need a relatively slow self-polishing antifouling paint, *e.g.* having a polishing rate in the range of 1-3 µm per 10,000 Nautical miles.

As mentioned above, the content of the Si-containing co-polymer defined above constitute at least 40% by solids volume of the binder system, preferably at least 50% by solids volume, in particular at least 60% by solids volume, such as at least 70% by solids volume, e.g. at least 80% by solids volume. In some cases the Si-containing co-polymer defined above may constitute as much as 70-100% by solids volume of-the binder system, such as 80-100% by solids volume of the binder system.

As will be understood by the person skilled in the art, one or several further binder components may be present in the binder system. Examples of such further binder components are:
oils such as linseed oil and derivatives thereof; castor oil and derivatives thereof; soy bean oil and derivatives thereof;
other polymeric binder components such as saturated polyester resins; polyvinylacetate, polyvinylbutyrate, polyvinylchloride-acetate, copolymers of vinyl acetate and vinyl isobutyl ether; vinylchloride; copolymers of vinyl chloride and vinyl isobutyl ether; alkyd resins or modified alkyd resins; hydrocarbon resins such as petroleum fraction condensates; chlorinated polyolefines such as chlorinated rubber, chlorinated polyethylene, chlorinated polypropylene; styrene copolymers such as styrene/butadiene copolymers, styrene/methacrylate and styrene/acrylate copolymers; acrylic resins such as homopolymers and copolymers of methyl methacrylate, ethyl methacrylate, n-butyl methacrylate, isobutyl methacrylate and isobutyl methacrylate; hydroxy-acrylate copolymers; polyamide resins such as polyamide based on dimerized fatty acids, such as dimerized tall oil fatty acids; cyclized rubbers; epoxy esters; epoxy urethanes; polyurethanes; epoxy polymers; hydroxy-polyether resins; polyamine resins; etc., as well as copolymers thereof;
rosin or rosin equivalents (e.g. those generally and specifically described in WO 97/44401 ).

Further binder components preferably constitute 0-30% such 0-20%, by solids volume of the paint.

It should be understood that the group of other polymeric binder components may include polymeric flexibilisers such as those generally and specifically defined in WO 97/44401.

As the paints according to the present invention are antifouling paints, it is often advantageous to incorporate at least one biologically active agent in the paint in order to further enhance the antifouling properties.

In the present context the term "biologically active agent" is intended to mean any chemical compound or mixture of chemical compounds which has the capability of suppressing the settlement and/or growth of marine organisms, to any substrate containing the biologically active agent. The suppression can be executed by any mechanism lethal to the organisms, by any mechanism resulting in deterrence and/or repellence of the organisms with or without causing mortality or by any mechanism inhibiting the settlement of the organisms with or without causing mortality.

Examples of biologically active agents are:
organometals such as metallo-dithiocarbamates such as bis(dimethyldithiocarbamato)zinc, ethylene-bis(dithiocarbamato)zinc, ethylene-bis(dithiocarbamato)manganese, and complexes between these; bis(1-hydroxy-2(1H)-pyridinethionato-O,S)-(T-4) copper; copper acrylate; bis(1-hydroxy-2(1H)-pyridinethionato-O,S)-(T-4) zinc; phenyl(bispyridyl)-bismuth dichloride;
metal biocides such as copper, copper metal alloys such as copper-nickel alloys; metal oxides such as cuprous oxide and cupric oxide (even though *e.g*. cuprous oxide and cupric oxide may have pigment characteristics, it is understood that in the present context such biologically active agents are only considered as "biologically active agents"); metal salts such as cuprous thiocyanate, barium metaborate, and copper sulphide;
heterocyclic nitrogen compounds such as 3a,4,7,7a-tetrahydro-2-((trichloromethyl)-thio)-1H-isoindole-1,3(2H)-dione, pyridine-triphenylborane, 1-(2,4,6-trichlorophenyl)-1H-pyrrole-2,5-dione, 2,3,5,6-tetrachloro-4-(methylsulphonyl)-pyridine, 2-methylthio-4-tert-butylamino-6-cyclopropylamine-s-triazin, and quinoline derivatives;
heterocyclic sulphur compounds such as 2-(4-thiazolyl)benzimidazole, 4,5-dichloro-2-octyl-3(2H)-isothiazolone, 4,5-dichloro-2-octyl-3(2H)-isothiazotine, 1,2-benzisothiazolin-3-one, and 2-(thiocyanatomethylthio)-benzothiazole;
urea derivatives such as N-(1,3-bis(hydroxymethyl)-2,5-dioxo-4-imidazolidinyl)-N,N'-bis(hydroxymethyl)urea, and 3-(3,4-dichlorophenyl)-1,1-dimethyl urea;
amides or imides of carboxylic acids; sulphonic acids and of sulphenic acids such as 1,1-dichloro-N-((dimethylamino)sulphonyl)-1-fluoro-N-(4-methylphenyl)-methanesulphenamide, 2,2-dibromo-3-nitrilo-propionamide, N-(dichlorofluoromethylthio)-phthalimide, N,N-dimethyl-N'-phenyl-N'-(dichlorofluoromethylthio)-sulphamide, and N-methylol formamide;
salts or esters of carboxylic acids such as 2-((3-iodo-2-propynyl)oxy)-ethanol phenylcarbamate and N,N-didecyl-N-methyl-poly(oxyethyl)ammonium propionate;
amines such as dehydroabiethylamines and cocodimethylamine;
substituted methane such as di(2-hydroxy-ethoxy)methane, 5,5'-dichloro-2,2'-dihydroxydiphenylmethane, and methylene-bisthiocyanate;
substituted benzene such as 2,4,5,6-tetrachloro-1,3-benzenedicarbonitrile, 1,1-dichloro-N-((dimethylamino)-sulphonyl)-1-fluoro-N-phenylmethanesulphenamide, and 1-((diiodomethyl)sulphonyl)-4-methyl-benzene;
tetraalkyl phosphonium halogenides such as tri-n-butyltetradecyl phosphonium chloride;
guanidine derivatives such as n-dodecylguanidine hydrochloride;
disulphides such as bis-(dimethylthiocarbamoyl)-disulphide, tetramethylthiuram disulphide;
and mixtures thereof.

Presently, it is preferred that the biologically active agent is an agent which do not comprise tin.

In the antifouling paint, the total amount of the biologically active agent(s) may be in the range of 2-50%, such as 3-50%, by solids volume of the paint, preferably 5-50%, such as 5-40%, by solids volume of the paint. Depending upon the type and specific activity of the biologically active agent, the total amount of the biologically active agent may, *e.g.*, be 5-15% or 10-25% by solids volume of the paint.

A typical marine antifouling paint according to the invention comprises a binder system based on a co-polymer as defined above, optionally at least one biologically active agent, and fibres as defined above. Furthermore, the antifouling paint may comprise one or more components selected among pigments, fillers, dyes, additives, and solvents. It should be understood that any solvents are not included in the contents stated as "% by solids volume". Instead, the content of solvent(s) is expressed as "solids volume ratio" or SVR which indicates the volume of the dry matter in relation to the total volume of the paint including the solvent.

Examples of pigments are grades of titanium dioxide, red iron oxide, zinc oxide, carbon black, graphite, yellow iron oxide, red molybdate, yellow molybdate, zinc sulphide, antimony oxide, sodium aluminium sulphosilicates, quinacridones, phthalocyanine blue, phthalocyanine green, titaniumdioxide, black iron oxide, graphite, indanthrone blue, cobalt aluminium oxide, carbazole dioxazine, chromium oxide, isoindoline orange, bis-acetoaceto-tolidiole, benzimidazolon, quinaphtalone yellow, isoindoline yellow, tetrachloroisoindolinone, quinophthalone yellow. Such materials are characterised in that they render the final paint coating non-transparent and non-translucent. The pigments may further be selected from pigment-like ingredients such as fillers. Examples of fillers are calcium carbonate, dolomite, talc, mica, barium sulphate, kaolin, silica, perlite, magnesium oxide, calcite and quartz flour, etc. These materials are characterised in that they do not render the paint non-translucent and therefore do not contribute significantly to hide any material below the coating of the paint of the invention.

In a preferred embodiment of the present invention, the paint has a total pigment content (pigment and pigment-like ingredients) in the range of 1-60%, preferably 1-50%, in particular 1-25% such as 1-15%, of the solids volume of the paint.

Examples of dyes are 1,4-bis(butylamino)anthraquinone and other anthraquinone derivatives; toluidine dyes etc.

Examples of additives are:
plasticizers such as chlorinated paraffin; phthalates such as dibutyl phthalate, benzylbutyl phthalate, dioctyl phthalate, diisononyl phthalate and diisodecyl phthalate; phosphate esters such as tricresyl phosphate, nonylphenol phosphate, octyloxipoly(ethyleneoxy)ethyl phosphate, tributoxyethyl phosphate, isooctylphosphate and 2-ethylhexyl diphenyl phosphate; sulphonamides such as N-ethyl-p-toluensulphonamide, alkyl-p-toluene sulphonamide; adipates such as bis(2-ethylhexyl)adipate), diisobutyl adipate and dioctyladipate; phosphoric acid triethyl ester; butyl stearate; sorbitan trioleate; and epoxidised soybean oil;
surfactants such as derivatives of propylene oxide or ethylene oxide such as alkylphenol-ethylene oxide condensates; ethoxylated monoethanolamides of unsaturated fatty acids such as ethoxylated monoethanolamides of linoleic acid; sodium dodecyl sulphate; alkylphenol ethoxylates; and soya lecithin;
wetting agents and dispersants such as those described in M. Ash and I. Ash, "Handbook of Paint and Coating Raw Materials, Vol. 1", 1996, Gower Publ. Ltd., Great Britain, pp 821-823 and 849-851;
defoaming agents such as silicone oils;
catalysts such as polymerization catalysts and initiators, *e.g.* azobisisobutyronitrile, ammonium persulphate, dilauryl peroxide, di-t-butyl peroxide, cumene hydroperoxide, p-toluenesulphonic acid; dryers, *e.g.* metal octoates and metal naphthenates; and activators, *e.g.* salicylic acid and benzyl alcohol;
stabilizers such as stabilizers against light and heat, *e.g.* hindered amine light stabilizers (HALS), 2-hydroxy-4-methoxybenzophenone, 2-(5-chloro-(2H)-benzotriazol-2-yl)-4-methyl-6-(tert-butyl)phenol, and 2,4-ditert-butyl-6-(5-chlorobenzotriazol-2-yl)phenol; stabilizers against moisture such as molecular sieves or water scavengers such as synthetic zeolites, substituted isocyanates, substituted silanes and ortho formic acid triethyl ester; stabilizers against oxidation such as butylated hydroxyanisole; butylated hydroxytoluene; propylgallate; tocopherols; 2,5-di-tert-butyl-hydroquinone; L-ascorbyl palmitate; carotenes; vitamin A;
polymerization inhibitors, *e.g*., dibenzoyl peroxide. azobis-isobutyronitrile, para-benzoquinone, hydroquinone and methyl-hydroquinone;
inhibitors against corrosion such as aminocarboxylates, calcium silicophosphate, ammonium benzoate, barium/calcium/zinc/magnesium salts of alkylnaphthalene sulphonic acids, zinc phosphate; zinc metaborate;
coalescing agents such as glycols, 2-butoxy ethanol, and 2,2,4-trimethyl-1,3-pentanediol monoisobutyrate; and
thickeners and anti-settling agents such as colloidal silica, hydrated aluminium silicate (bentonite), aluminiumtristearate, aluminiummonostearate, ricinus oil, xanthan gum, salicylic acid, chrysotile, pyrogenic silica, hydrogenated castor oil, organo-modified clays, polyamide waxes and polyethylene waxes.

It is preferred that the paints according to the present invention comprises dyes and additives in a cumulative content of 0-15% by solids volume.

Examples of solvents in which the components of the antifouling paint are dissolved, dispersed or emulsified are water (e.g. in the form of a dispersion or an emulsion); alcohols such as methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 2-butoxyethanol, propylene glycol monomethyl ether and butyl diglycol; esters such as methoxypropyl acetate, n-butyl acetate and 2-ethoxyethyl acetate; chlorinated hydrocarbons such as methylene chloride, tetrachloroethane and trichloroethylene; and mixtures thereof.

A preferred embodiment of the marine antifouling paint according to the invention is a paint, which comprises one or more pigment(s) and one or more solvent(s) as well as any necessary or desirable dyes and additives.

The antifouling paint may be prepared by any suitable technique that is commonly used within the field of paint production. Thus, the various components may be mixed together using a high speed disperser, a ball mill, a pearl mill, a three-roll mill etc. The antifouling paints according to the invention may be filtrated using bag filters, patron filters, wire gap filters, wedge wire filters, metal edge filters, EGLM turnoclean filters (ex Cuno), DELTA strain filters (ex Cuno), and Jenag Strainer filters (ex Jenag), or by vibration filtration.

The antifouling paint according to the invention may be applied to the marine structure to be protected by means of any of the usual techniques used within the paint field such as by means of a brush, a roller, a pad, by dipping, by spraying etc. The exact technique chosen depends upon the object to be protected and also upon the particular composition (such as its viscosity etc.) and upon the particular situation. Preferred applications techniques are spraying and by means of a brush or a roller.

Depending on the application technique, it is desirable that the paint comprises solvent(s) so that the SVR is in the range of 30-100%, such as 30-70%.

The optimal composition of the antifouling paints described herein will of course depend on the characteristics and properties of the individual components of the paint, in particular the type and concentration of the silylated acrylate-based binder. In an especially interesting embodiments of the present invention, the paint has the following composition:
1) a binder co-polymer comprising at least one side chain bearing at least one terminal group of the formula I (see above) constituting 15-80% by solids volume of the paint;
2) further binder components constituting 0-30% by solids volume of the paint;
3) fibres constituting 0.1-30% by solids volume of the paint;
4) one or more biologically active agent(s) constituting 2-50% by solids volume of the paint;
5) one or more pigment(s) constituting 1-15% by solids volume of the paint;
6) dyes and additives constituting 0-15% by solids volume of the paint; and
7) optionally one or more solvents.

The antifouling paint according to the invention may be applied to the marine structure to be protected in one or several successive layers, typically 1 to 5 layers, preferably 1 to 3 layers. The total dry film thickness (DFT) of the coating applied per layer will typically be 10-300 µm, preferably 20-250 µm, such as 40-200 µm. Thus, the thickness of the coating will typically be 10-900 µm, preferably 20-750 µm, in particular 40-600 µm, such as 80-400µm.

The marine structure to which the paint according to the invention may be applied to may be any of a wide variety of solid objects that come into contact with water, for example vessels (including but not limited to boats, yachts, motorboats, motor launches, ocean liners, tugboats, tankers, container ships and other cargo ships, submarines (both nuclear and conventional), and naval vessels of all types); pipes; shore and off-shore machinery, constructions and objects of all types such as piers, pilings, bridge substructures, floatation devices, underwater oil well structures etc; nets and other mariculture installations; cooling plants; and buoys; and is especially applicable to the hulls of ships and boats and to pipes.

Prior to the application of a paint of the invention to a marine structure, the marine structure may first be coated with a primer-system which may comprise several layers and may be any of the conventional primer systems used in connection with application of antifouling paints to marine structures. Thus, the primer system may include an anticorrosive primer optionally followed by a layer of an adhesion-promoting primer. In a preferred embodiment, the primer-system is a composition having a polishing rate of less than 1 µm per 10,000 Nautical miles, i.e. the primer is a non-self-polishing coating.

As mentioned herein, the coating resulting from the paint according to the present invention is preferably self-polishing. Thus, the antifouling paint (actually the coating) should have a polishing rate of at least 1 µm per 10,000 Nautical miles (18,520 km). Preferably the polishing rate is in the range of 1-50 µm, in particular in the range of 1-30 µm per 10,000 Nautical miles (18,520 km).

It is furthermore preferred that the coating resulting from the paint according to the invention shows excellent mechanical properties when tested in various mechanical test.

Thus, in a preferred embodiment, the paint composition according to the invention is a paint composition which
i) when tested for two months in the Rotor Test herein shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres;
   or
ii) when tested in the Blister Box Test (as described herein) for 8 weeks, or alternatively 16 weeks, shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

It is found that the combination of "Density of cracking" and "Size of cracks" gives a particularly relevant evaluation of the effect of the invention, i.e. either should the "Density of cracking" show a decrease or alternatively should the "Size of cracks" show a decrease. In particular, both the "Density of cracking" and "Size of cracks" should show a decrease. In general it should however be understood that even when the "Density of cracking" is at about the same level than for a paint composition without fibres, a reduction of the "Size of cracks" will also be useful, and vice versa.

Thus, the paint composition should, when tested in the Blister Box Test (as described herein) for 8 weeks, or alternatively for 16 weeks, preferably show a decrease with respect to the sum of the ranking of "Density of cracking" and "Size of cracks" of at least 1 Ranking Value Unit, preferably at least 2 Ranking Value Units, such as at least 3, or 4, or 5, Ranking Value Units, when compared to an identical test performed on the paint without fibres

Examples of especially preferred paint compositions according to the invention are such paint compositions, which when tested in the Rotor Test for four months, six months, eight months, ten months or even twelve months (as described herein) shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

In another preferred embodiment of the invention, the paint composition according to the invention is such a paint composition which
i) when tested in the Rotor Test for two months (as described herein) shows a Ranking Value with respect to "Size of cracks" or "Density of cracking" of at the most 1, preferably 0;
   or
ii) when tested in the Rotor Test for two months (as described herein) shows a Ranking Value with respect to "Flaked area" or "Size of flaking" of at the most 1, preferably 0;
   or
iii) when tested in the Blister Box Test (as described herein) for 8 weeks, or alternatively 16 weeks, shows a Ranking Value with respect to "Size of cracks" or "Density of cracks" of at the most 1, preferably 0;
   or
iv) when tested in the Blister Box Test (as described herein) for 8 weeks shows a Ranking Value with respect to "Flaked area" or "Size of flaking" of at the most 1, preferably 0.

Examples of particular preferred paint compositions according to the invention are such paint compositions, which
i) when tested in the Rotor Test for four, six, eight, ten or even twelve months (as described herein) shows a Ranking Value with respect to "Size of cracks" or "Density of cracking" of at the most 1, preferably 0;
   or
ii) when tested in the Rotor Test for four, six, eight, ten or even twelve months (as described herein) shows a Ranking Value with respect to "Flaked area" or "Size of flaking" of at the most 1, preferably 0.

### EXPERIMENTAL

### Polishing Rate Test

### Microtome test variant

An acrylic test panel (13.5 x 7 cm²) with a curvature corresponding to that of a cylindrical drum with a diameter of 1 m is first coated with 80 µm (DFT) of a commercial vinyl primer (Hempanyl Tar 16280 ex Hempel's Marine Paints A/S) applied by air spraying. After minimum 24 hours drying in the laboratory at room temperature the test paint is applied by air spraying in two coats in a DFT of approximately 100 µm per coat (total test paint DFT: 200 µm). Recoating interval between two coats of test paint: 24 hours. After at least 48 hours drying from the last test paint coat, bands of 1 cm width of a commercial, non-erodible vinyl antifouling coating (Classic 76550 ex Hempel's Marine Paints A/S) are applied along each longitudinal edge by dipping. As a result of this, the central part with a width of 5 cm remained uncovered by the non-erodible coating. The panel is dried for at least 1 week in the laboratory at room temperature before testing.

The test panel is fixed onto the convex surface of a cylindrical drum of 1 m in diameter and is rotated in sea water with a salinity in the range of 37-38 parts per thousand at an average temperature of 17-18°C at a test site in the harbour of Villanova y La Geltrú in Northeastern Spain which is situated at longitude 41.2°N (see also Morale, E. & Arias, E., Rev. Iber. Corros. y Prot., vol XIX(2), 1988, pp. 91-96). The rotor is rotated at a peripheral speed of 15 knots for a relative distance of 33,100 Nautical miles.

Every 3-5 weeks, paint chips (1.0 x 0.5 cm²) are collected from the test panel in such a way that their surface comprised both a part coated with the experimental coating only as well as a part coated with both experimental coating and the non-erodible coating. The chips are embedded in paraffin wax and cut with a microtome. Cross sections of the experimental coating are examined under a microscope. Compared to the part coated with the non-erodible coating, the experimental coating shows a decrease of DFT of the outer layer corresponding to the polishing rate. The polishing rate (polishing per 10,000 Nautical miles (18,520 km)) is calculated.

Polishing rate tests are generally described by Furtado, S.E.J. and Fletcher, R.L., "Test Procedures For Marine Antifouling Paints. Preservatives in The Food Pharmaceutical and Environmental Industries", pp 145-163 (1987) and Van Londen, A.M., "Evaluation of Testing Methods for Antifouling Paints", Journal of Paint Technology, 42, pp 511-515 (1970).

### Isoscope test variant

An acrylic test panel (13.5 x 7 cm²) with a curvature corresponding to that of a cylindrical drum with a diameter of 1 m is first coated with 40 µm of an epoxy primer (Hempadur Primer 15300 ex Hempel's Marine Paints A/S). After 24 hours, the panel is coated with 80 µm (DFT) of a commercial vinyl primer (Hempanyl Tar 16280 ex Hempel's Marine Paints A/S) applied by air spraying. After minimum 24 hours drying in the laboratory at room temperature the test paint is applied by air spraying in two coats in a DFT of approximately 100 µm per coat (total test paint DFT: 200 µm). Recoating interval between two coats of test paint: 24 hours. The initial thickness of the coat of the test paint is measured using an ISOSCOPE MP-3. The panel is dried for at least 1 week in the laboratory at room temperature before testing.

The panel is placed on a rotor as described above. The thickness is controlled with periodic inspections using the ISOSCOPE MP-3. The polishing is the difference between the film thickness measures at a given inspection and the initial film thickness. The polishing rate is expressed as the polishing measured in µm per 10,000 Nm.

### Blister Box Test

### Preparation of panels

Acrylic panels (155x100x5 mm) are first coated with 80 µm (dry film thickness, DFT) of a commercial vinyl tar primer (Hempanyl 16280, from Hempel's Marine Paints) applied by air spraying. After 12-36 hours of drying in the laboratory at room temperature antifouling paints (model paints or commercial paints) are applied in the following way. A template (acrylic panel (155x100x5) with 4 holes (diameter = 41 mm)) is placed and fixed on top of the above mentioned panel coated with the primer. The antifouling paint adjusted to an viscosity of 70-75 KU is weighed into one of the holes. The amount of antifouling paint weighed into the whole correspond to a final DFT of 500 µm. The paint is spread through the hole surface through circular movements of the panel. Four paints may be applied to each panel (one in each hole). The template is removed 1-1½ hours after the application. The panels are dried for 4-5 days in the laboratory at room temperature before testing.

### Testing

Tests panels are tested in a Cleveland Condensation Tester (QCT from Q-Panel) in condensation and dry-off mode. QCT equipment is described in standard method ASTM D1735-92: *Testing water resistance of coatings using water fog apparatus.* Coated specimens are placed in an enclosed chamber where cycles of water fog (10 hours)/drying (2 hours) are applied. The temperature in the chamber is maintained at 50°C. During the water fog cycle water penetrates into the film while during the drying cycle water "escapes" from the paint film.

The test is operated for two months and the paints are evaluated every week for film defects as described below.

Every week the paints are evaluated with respect to the degree of cracking and the degree of flaking in accordance with the guidelines set forth in ISO standard 4628, parts 4 and 5.

Evaluation of the degree of cracking is based on the below ranking (ISO standard 4628, part 4):

| Density of cracking | Ranking Value |
|---|---|
| None | 0 |
| Less than few | 1 |
| Few | 2 |
| Medium | 3 |
| Medium - dense | 4 |
| Dense | 5 |

| Size of cracks | Ranking Value |
|---|---|
| Not visible under x 10 magnification | 0 |
| Only visible under magnification up to x 10 | 1 |
| Just visible with normal corrected vision | 2 |
| Clearly visible with normal corrected vision | 3 |
| Large cracks generally up to 1 mm wide | 4 |
| Very large cracks generally more than 1 mm wide | 5 |

Evaluation of the degree of flaking is based on the below ranking (ISO standard 4628, part 5):

| Flaked area (%) | Ranking Value |
|---|---|
| 0 | 0 |
| 0.1 | 1 |
| 0.3 | 2 |
| 1 | 3 |
| 3 | 4 |
| 15 | 5 |

| Size of flaking (largest dimension) | Ranking Value |
|---|---|
| Not visible under 10 x magnification | 0 |
| Up to 1 mm | 1 |
| Up to 3 mm | 2 |
| Up to 10 mm | 3 |
| Up to 30 mm | 4 |
| Larger than 30 mm | 5 |

### Rotor Test

An acrylic test panel (13.5 x 7 cm²) with a curvature corresponding to that of a cylindrical drum with a diameter of 1 m is first coated with 80 µm (DFT) of a commercial vinyl primer (Hempanyl Tar 16280 ex Hempel's Marine Paints A/S) applied by air spraying. After minimum 24 hours drying in the laboratory at room temperature the test paint is applied by air spraying in two coats in a DFT of approximately 100 µm per coat (total test paint DFT: 200 µm). Recoating interval between two coats of test paint: 24 hours. After at least 48 hours drying from the last test paint coat, bands of 1 cm width of a commercial, non-erodible vinyl antifouling coating (Classic 76550 ex Hempel's Marine Paints A/S) are applied along each longitudinal edge by dipping. As a result of this, the central part with a width of 5 cm remained uncovered by the non-erodible coating. The panel is dried for at least 1 week in the laboratory at room temperature before testing.

The test panel is fixed onto the convex surface of a cylindrical drum of 1 m in diameter and is rotated in sea water with a salinity in the range of 37-38 parts per thousand at an average temperature of 17-18°C at a test site in the harbour of Villanova y La Geltru in Northeastern Spain which is situated at longitude 41.2°N (see also Morale, E. & Arias, E., Rev. Iber. Corros. y Prot., vol XIX(2), 1988, pp. 91-96). The rotor is rotated at a peripheral speed of 15 knots for a relative distance of 33,100 Nautical miles.

Every two months (for one year) panels are dried for 15 minutes and evaluated with respect to the degree of cracking and the degree of flaking in accordance with the guidelines set forth in ISO standard 4628, parts 4 and 5 as described above in connection with the Blister Box Test.

### Model Paints

The following model paints (without fibres) can be prepared:

### Model Paint Composition A (without fibres)

58%, by solids volume, of a co-polymer as described herein
2%, by solids volume, of wetting agent Disperbyk 164 (ex. Byk Chemie, Germany)
2%, by solids volume, of fumed silica Aerosil 200 (ex. Degussa, Germany)
2%, by solids volume, of modified polyethylene wax Aditix M60 X (ex. Supercolori, Italy)
36%, by solids volume, of cuprous oxide (Red copper 97N premium grade ex. American Chemet USA)

Solids volume ratio (SVR): 50; Solvent: xylene

Examples of co-polymers to be incorporated in the model paint are, e.g., the tri-isopropyl silyl acrylate co-polymer described in connection with Example 1 below, or tributyl silyl methacrylate-methylmethacrylate-styrene co-polymer which was prepared in the following way:

Butyl acetate was charged in a reaction vessel equipped with an agitator, a condenser. a thermometer, a dropping device (separation funnel) an heated in an oil bath at 80°C. A monomer mixture consisting of 90 g tetrabutylsilylmethylacrylate, 100 g methylmethacrylate, 10 g styrene, and 3.6 g (corresponding to 1.8% of the monomers) azo-bis-isobutyronitrile (AIBN). One fourth of the monomer mixture was added in one portion at the beginning of the polymerisation reaction. Due to the addition of the monomer blend, the temperature in the reaction mixture dropped to about 70°C. After having reached a temperature of 80°C, the rest of the monomer mixture was added dropwise to the reaction vessel (over a period of 3 hours) while maintaining the temperature at 80°C. The agitation was continued for 3 hours, and AIBN was added 1 hour (1 g in 5 g methyl ethyl ketone (MEK)) and 2 hours (2 g in 10 g MEK) after addition of the monomers. Three hours after completion of addition of monomers the reaction temperature was increased to 90°C and AIBN (2 g in 10 g MEK) was added. In order to decrease the residual monomer level the temperature was kept at 90°C for 1.5 hour before the reaction mixture was cooled.

The following model paints (containing fibres) can be prepared:

### Model Paint Composition A1 (fibres included)

95% by solids volume of Model Paint A and 5% (by solids volume) of fibres (Lapinus Rockfibre MS 600 (ex. Lapinus))

### Commercially available paint compositions

### Paint Composition B (without fibres)

Nutrim (ex. Kansai, Japan). This particular paint is based on a binder co-polymer comprising tributyl-silyl groups, i.e. a co-polymer as described herein

### Paint Composition B1 (fibres included)

95% (by solids volume) of Paint Composition B and 5% (by solids volume) of fibres (Lapinus Rockfibre MS 600 (ex. Lapinus))

### Paint Composition C (without fibres)

Takata Quantumn 20 (ex. Nippon Oils and Fats, Japan). This particular paint is based on a binder co-polymer comprising triisopropyl-silyl groups, i.e. a co-polymer as described herein.

### Paint Composition C1 (fibres included)

95% (by solids volume) of Paint Composition C and 5% (by solids volume) of fibres (Lapinus Rockfibre MS 600 (ex. Lapinus) or F PAC O 245/040 ex Schwarzwälder Textil-Werke)

### Paint Composition D (without fibres)

Takata Quantumn 12 (ex. Nippon Oils and Fats, Japan). This particular paint is based on a binder co-polymer comprising triisopropyl-silyl groups, i.e. a co-polymer as described herein, in combination with rosin/rosinate.

### Paint Composition D1 (fibres included)

95% (by solids volume) of Paint Composition D and 5% (by solids volume) of fibres (Lapinus Rockfibre MS 600 (ex. Lapinus))

### Example 1

Model Paint Composition A (without fibres) and Model Paint Composition A1 (with fibres) were prepared as described above. The composition of the co-polymer incorporated in the model paints was:

| Monomer units | Amount (% by solids volume) |
|---|---|
| tri-isopropyl silyl acrylate (TIPSA) | 60% |
| Methoxy ethyl methacrylate (MOXEMA) | 15% |
| Methyl methacrylate (MMA) | 20% |
| Butyl methacrylate (BMA) | 5% |

The co-polymer was prepared as described in "Preparation Example 2" in EP 0 646 630 A1: Xylene and butyl acetate were placed in a flask equipped with a stirrer, a reflux condenser and a thermometer and heated to 134°C. A mixture of TIPSA, MOXEMA, MMA, BMA and *tert*-butylperoxy isopropylcarbonate (TBPIC) was added dropwise into the flask (with stirring) over a period of 3 hours. After completion of the addition, the temperature was maintained at 134°C for 30 minutes after which a mixture of xylene and TBPIC was added dropwise over a period of 20 minutes. The resulting mixture was stirred for 2 hours in order to complete the polymerisation reaction. Finally, xylene was added to the reaction mixture. Mₙ = 3,000, M_{w} = 9,000. Residual monomers: TIPSA: 0.04%, MOXEMA: 0.05%, MMA: <0.01%, BMA: 0.08%. Dry weight = 47.7%.

The employed fibre material was MS 600 ex. Lapinus Fibres.

The two model paints were subjected to the Rotor Test and the obtained results are compiled in Tables 1.1-1.4 below:

**Table 1-1:**

| *Density of cracking* | | | | | | |
|---|---|---|---|---|---|---|
| Model Paint Composition | Density of cracking observed after: | | | | | |
| | 2 | 4 | 6 | 8 | 10 | 12 (months) |
| A (without fibres) | 0 | 3 | 5 | ^{a)} | | |
| A1 (with fibres) | 0 | 0 | 0 | 3 | 3 | 3 |

| | | | | | | |
|---|---|---|---|---|---|---|
| ^{a)} no paint left, i.e. 100% flaking was observed after 8 months. | | | | | | |

**Table 1.2:**

| *Size of cracks* | | | | | | |
|---|---|---|---|---|---|---|
| Model Paint Composition | Size of cracks observed after: | | | | | |
| | 2 | 4 | 6 | 8 | 10 | 12 (months) |
| | | | | | | |
| A (without fibres) | 0 | 4 | 4 | ^{b)} | | |
| A1 (with fibres) | 0 | 0 | 0 | 1 | 1 | 1 |

| | | | | | | |
|---|---|---|---|---|---|---|
| ^{b)} no paint left, i.e. 100% flaking was observed after 8 months. | | | | | | |

**Table 1.3:**

| *Flaked area* | | | | | | |
|---|---|---|---|---|---|---|
| Model Paint Composition | Flaked area observed after: | | | | | |
| | 2 | 4 | 6 | 8 | 10 | 12 (months) |
| A (without fibres) | 0 | 0 | 3 | 5 | ^{c)} | |
| A1 (with fibres) | 0 | 0 | 0 | 0 | 0 | 0 |

| | | | | | | |
|---|---|---|---|---|---|---|
| ^{c)} no paint left, i.e. 100% flaking was observed after 10 months. | | | | | | |

**Table 1.4:**

| *Size of flaking* | | | | | | |
|---|---|---|---|---|---|---|
| Model Paint Composition | Size of flaking observed after: | | | | | |
| | 2 | 4 | 6 | 8 | 10 | 12 (months) |
| A (without fibres) | 0 | 0 | 3 | 4 | ^{d)} | |
| A1 (with fibres) | 0 | 0 | 0 | 0 | 0 | 0 |

| | | | | | | |
|---|---|---|---|---|---|---|
| ^{d)} no paint left, i.e. 100% flaking was observed after 10 months. | | | | | | |

As it appears from the above results a significant reduction of density of cracking, size of cracking, flaked area and size of flaking is observed when 5% by solids volume of the above-mentioned fibre material is incorporated in the paint composition.

### Example 2

Model Paint Composition A (without fibres) and Model Paint Composition A1 (with fibres) were prepared as described as in Example 1.

The employed fibre material was MS 600 ex. Lapinus Fibres.

The model paints were subjected to the Blister Box Test and the results obtained are compiled in Tables 2.1 and 2.2:

**Table 2.1:**

| *Density of cracking* | | | | |
|---|---|---|---|---|
| Model Paint Composition | Density of cracking observed after: | | | |
| | 0 | 3 | 5 | 8 (weeks) |
| A (without fibres) | 5 | 5 | 5 | 5 |
| A1 (with MS 600 fibres) | 0 | 2 | 4 | 4 |

**Table 2.2:**

| *Size of cracks* | | | | |
|---|---|---|---|---|
| Model Paint Composition | Size of cracks observed after: | | | |
| | 0 | 3 | 5 | 8 (weeks) |
| A (without fibres) | 2 | 3 | 5 | 5 |
| A1 (with MS 600 fibres) | 0 | 4 | 5 | 5 |

As it appears from the above results a significant reduction of sum of the rating for "density of cracking" and "size of cracking" is observed when 5% by solids volume of the above-mentioned fibre material is incorporated in the paint composition.

### Example 3

Model Paint Composition B (without fibres) and Model Paint Composition B1 (with fibres) were prepared as described above.

The employed fibre material was MS 600 ex. Lapinus Fibres. As a reference, a conventional filler material Lanco Mikal (mica) 00180 ex G.M. Langer was used.

The model paints were subjected to the Blister Box Test and the obtained results are compiled in Tables 3.1-3.2:

**Table 3.1:**

| *Density of cracking* | | | | | |
|---|---|---|---|---|---|
| Model Paint Composition | Density of cracking observed after | | | | |
| | 0 | 1 | 3 | 5 | 8 (weeks) |
| B (without fibres) | 0 | 3 | 5 | 5 | 5 |
| B1 (with MS 600 fibres) | 0 | 0 | 0 | 1 | 1 |
| B1 (with Mikal) | 0 | 1 | 3 | 4 | 4 |

**Table 3.2:**

| *Size of cracks* | | | | | |
|---|---|---|---|---|---|
| Model Paint Composition | Size of cracks observed after: | | | | |
| | 0 | 1 | 3 | 5 | 8 (weeks) |
| B (without fibres) | 0 | 3 | 4 | 5 | 5 |
| B1 (with MS 600 fibres) | 0 | 0 | 0 | 3 | 3 |
| B1 (with Mikal) | 0 | 3 | 5 | 5 | 5 |

As it appears from the above results a significant reduction of density of cracking and/or size of cracking observed when 5% by solids volume of the above-mentioned fibre material is incorporated in the paint composition.

### Example 4

Model Paint Composition C (without fibres) and Model Paint Composition C1 (with fibres) were prepared as described above.

The employed fibre material was MS 600 ex. Lapinus Fibres and F PAC O 245/040 ex Schwarzwälder Textil-Werke. As a reference, a conventional filler material Lanco Mikal (mica) 00180 was used.

The model paints were subjected to the Blister Box Test and the obtained results are compiled in Tables 4.1-4.2:

**Table 4.1:**

| *Density of cracking* | | | | | |
|---|---|---|---|---|---|
| Model Paint Composition | Density of cracking observed after: | | | | |
| | 0 | 1 | 3 | 5 | 8 (weeks) |
| C (without fibres) | 1 | 1 | 5 | 5 | 5 |
| C1 (with MS 600 fibres) | 0 | 0 | 1 | 2 | 2 |
| C1 (with F PAC O 245/040 fibres) | 0 | 0 | 5 | 5 | 5 |
| C1 (with Mikal) | 0 | 0 | 4 | 5 | 5 |

**Table 4.2:**

| *Size of cracks* | | | | | |
|---|---|---|---|---|---|
| Model Paint Composition | Size of cracks observed after: | | | | |
| | 0 | 1 | 3 | 5 | 8 (weeks) |
| C (without fibres) | 1 | 1 | 5 | 5 | 5 |
| C1 (with MS 600 fibres) | 0 | 0 | 3 | 5 | 5 |
| C1 (with F PAC O 245/040 fibres) | 0 | 0 | 2 | 2 | 2 |
| C1 (with Mikal) | 0 | 0 | 4 | 5 | 5 |

As it appears from the above results a significant reduction of sum of the rating for "density of cracking" and "size of cracking" is observed when 5% by solids volume of the above-mentioned fibre material is incorporated in the paint composition.

### Example 5

Model Paint Composition D (without fibres) and Model Paint Composition D1 (with fibres) were prepared as described above.

The employed fibre material was MS 600 ex. Lapinus Fibres.

The model paints were subjected to the Blister Box Test and the obtained results are compiled in Tables 5.1-5.2:

**Table 5.1:**

| *Density of cracking* | | | | | |
|---|---|---|---|---|---|
| Model Paint Composition | Density of cracking observed after: | | | | |
| | 0 | 1 | 3 | 5 | 8 (weeks) |
| D (without fibres) | 0 | 0 | 2 | 2 | 2 |
| D1 (with MS 600 fibres) | 0 | 0 | 0 | 0 | 1 |

**Table 5.2:**

| *Size of cracks* | | | | | |
|---|---|---|---|---|---|
| Model Paint Composition | Size of cracks observed after: | | | | |
| | 0 | 1 | 3 | 5 | 8 (weeks) |
| D (without fibres) | 0 | 0 | 4 | 4 | 5 |
| D1 (with MS 600 fibres) | 0 | 0 | 0 | 0 | 2 |

As it appears from the above results a significant reduction of density of cracking and size of cracking is observed when 5% by solids volume of the above-mentioned fibre material is incorporated in the paint composition.

### Example 6

Model paint E (without fibres) and Model paint E1 (with fibres) can be prepared as follows (following the directions given above):
48%, by solids volume, of the co-polymer as described in Example 1
10%, by solids volume, of rosin (Chinese Gum Rosin WW from China National Export)
2%, by solids volume, of wetting agent Disperbyk 164 (ex. Byk Chemie, Germany)
2%, by solids volume, of fumed silica Aerosil 200 (ex. Degussa, Germany)
2%, by solids volume, of modified polyethylene wax Aditix M60 X (ex. Supercolori, Italy)
36%, by solids volume, of cuprous oxide (Red copper 97N premium grade ex. American Chemet USA)

### Example 7

Model paint F (without fibres) and Model paint F1 (with fibres) can be prepared as follows (following the directions given above):
38%, by solids volume, of the co-polymer as described in Example 1
20%, by solids volume, of rosin (Chinese Gum Rosin WW from China National Export) 2%, by solids volume, of wetting agent Disperbyk 164 (ex. Byk Chemie, Germany)
2%, by solids volume, of fumed silica Aerosil 200 (ex. Degussa, Germany)
2%, by solids volume, of modified polyethylene wax Aditix M60 X (ex. Supercolori, Italy)
36%, by solids volume, of cuprous oxide (Red copper 97N premium grade ex. American Chemet USA)

## Claims

1. A self-polishing marine antifouling paint composition comprising:
i) at least one binder co-polymer comprising at least one side chain bearing at least one terminal group of formula I 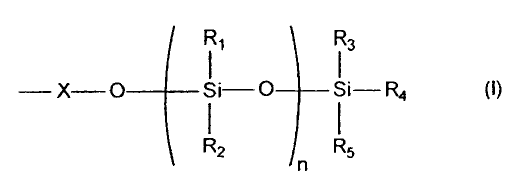 wherein R₁, R₂, R₃, R₄ and R₅ are each independently selected from the group consisting of optionally substituted C₁₋₂₀-alkyl, optionally substituted C₁₋₂₀-alkoxy, optionally substituted aryl and optionally substituted aryloxy; X is >C(=O); and
n is 0 or an integer of 1 or more; and
ii) fibres.

2. A self-polishing marine antifouling paint composition according to claim 1, wherein the terminal group has the general formula II 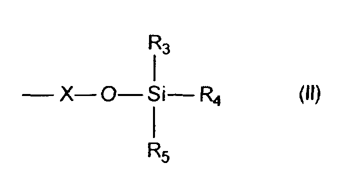 wherein X, R₃, R₄ and R₅ are as defined in claim 1.

3. A self-polishing marine antifouling paint composition according to claim 1 or 2, wherein R₁, R₂, R₃, R₄ and R₅ are each independently selected from the group consisting of C₁₋₂₀-alkyl, C₁₋₂₀-alkoxy, optionally substituted phenyl, optionally substituted phenoxy and optionally substituted naphthyl.

4. A self-polishing marine antifouling paint composition according to any of the preceding claims, wherein the triorganosilyl group, -Si(R₃)(R₄)(R₅), is selected from the group consisting of trimethylsilyl, triethylsilyl, tri-n-proprylsilyl, tri-n-butylsilyl, tri-*iso*-propylsilyl, tri-n-pentylsilyl, tri-n-hexylsilyl, tri-n-octylsilyl, tri-n-dodecylsilyl, triphenylsilyl, tri-p-methylphenylsilyl, tribenzylsilyl, tri-2-methylisopropylsilyl, tri-*tert*-butylsilyl, ethyldimethylsilyl, n-butyldimethylsilyl, di-*iso*-propyl-n-butylsilyl, n-octyl-di-n-butylsilyl, di-*iso*-propryloctadecylsilyl, dicyclohexylphenylphenylsilyl, *tert*-butyldiphenylsilyl, dodecyldiphenylsilyl and diphenylmethylsilyl.

5. A self-polishing marine antifouling paint composition according to claim 4, wherein the triorganosilyl group is selected from the group consisting of tri-n-butylsilyl, tri-*tert*-butylsilyl, triphenylsilyl, phenyldimethylsilyl, diphenylmethylsilyl, tri-*iso*-propylsilyl and trimethylsilyl.

6. A self-polishing marine antifouling paint composition according to claim 5, wherein the triorganosilyl group is tri-*iso*-propylsilyl.

7. A self-polishing marine antifouling paint composition according to any of the preceding claims, wherein the binder co-polymer is selected from the group consisting of acrylic co-polymers, methacrylic co-polymers, maleic co-polymers, fumaric co-polymers, itaconic co-polymers, citraconic co-polymers and mixtures thereof.

8. A marine antifouling paint composition according to claim 7, wherein the binder co-polymer is selected from the group consisting of acrylic co-polymers, methacrylic co-polymers and mixtures thereof.

9. A marine antifouling paint composition according to claims 7 and 8, wherein the acrylic co-polymer or the methacrylic co-polymer comprise co-monomer units selected from the group consisting of methyl methacrylate, methoxy ethyl methacrylate and mixtures thereof.

10. A marine antifouling paint composition according to any of the preceding claims, wherein the co-polymer comprises monomer units with a terminal group of the general formula II as defined in claim 2 in combination with a second monomer B selected from methoxyethyl (meth)acrylate, ethoxyethyl (meth)acrylate, propoxyethyl (meth)acrylate, butoxyethyl (meth)acrylate, hexoxyethyl (meth)acrylate, methoxydiethylene glycol (meth)acrylate, methoxytriethylene glycol (meth)acrylate, ethoxydiethylene glycol (meth)acrylate, and ethoxytriethylene glycol (meth)acrylate.

11. A marine antifouling paint composition according to any of the preceding claims, wherein the weight average molecular weight of the co-polymer is in the range of 1,000-1,500,000, such as in the range from 5,000-1,000,000, preferably in the range from 5,000-500,000, e.g. in the range from 5,000-100,000.

12. A marine antifouling paint composition according to any of the preceding claims, wherein the fibres are present in the paint in an amount of 3-8% by solids volume.

13. A marine antifouling paint composition according to any of the preceding claims, which additionally comprises at least one biologically active agent.

14. A marine antifouling paint composition according to any of the preceding claims, which additionally comprises at least one pigment, at least one dye, at least one additive and/or at least one solvent.

15. A marine antifouling paint composition according to any of the preceding claims which
i) when tested in the Rotor Test for two months (as described herein) shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres;
or
ii) when tested in the Blister Box Test (as described herein) for 8 months shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

16. A marine antifouling paint composition according to any of the preceding claims which when tested in the Rotor Test for four months (as described herein) shows a decrease with respect to "Density of cracking", "Size of cracks", "Flaked area" or "Size of flaking" of at least 1 Ranking Value Unit, preferably at least 2 Ranking Value Units, such as at least 3 Ranking Value Units, when compared to an identical test performed on the paint without fibres.

17. A marine antifouling paint composition according to any of the preceding claims, which
i) when tested in the Rotor Test for two months (as described herein) shows a Ranking Value with respect to "Size of cracks" or "Density of cracking" of at the most 1, preferably 0;
or
ii) when tested in the Rotor Test for two months (as described herein) shows a Ranking Value with respect to "Flaked area" or "Size of flaking" of at the most 1, preferably 0;
or
iii) when tested in the Blister Box Test (as described herein) for 8 months shows a Ranking Value with respect to "Size of cracks" or "Density of cracks" of at the most 1, preferably 0;
or
iv) when tested in the Blister Box Test (as described herein) for 8 months shows a Ranking Value with respect to "Flaked area" or "Size of flaking" of at the most 1, preferably 0.

18. A marine antifouling paint composition according to any of the preceding claims, which
i) when tested in the Rotor Test for four months (as described herein) shows a Ranking Value with respect to "Size of cracks" or "Density of cracking" of at the most 1, preferably 0;
or
ii) when tested in the Rotor Test for four months (as described herein) shows a Ranking Value with respect to "Flaked area" or "Size of flaking" of at the most 1, preferably 0.

19. A marine antifouling paint composition according to any of the preceding claims, where the fibres are such fibres that, when incorporated in Model Paint Composition A 58%, by solids volume, of a co-polymer as described herein
2%, by solids volume, of wetting agent
2%, by solids volume, of fumed silica
2%, by solids volume, of modified polyethylene wax
36%, by solids volume, of cuprous oxide
in an amount of 5% by solids volume, and
i) when tested in the Rotor Test for two months (as described herein) shows a decrease with respect to "Size of cracks", "Density of cracking", "Flaked area" or "Size of flaking" of at least 1 Ranking Value Unit, preferably at least 2 Ranking Value Units, such as at least 3 Ranking value Units, when compared to an identical test performed on the paint without fibres;
or
ii) when tested in the Blister Box Test (as described herein) shows a decrease with respect to "Size of cracks", "Density of cracking", "Flaked area" or "Size of flaking" of at least 1 Ranking Value Unit, preferably at least 2 Ranking Value Units, such as at least 3 Ranking value Units, when compared to an identical test performed on the paint without fibres.

20. A marine antifouling paint composition according to any of the preceding claims, where the fibres are such fibres that, when incorporated in a Model Paint Composition A
58%, by solids volume, of a co-polymer as described herein
2%, by solids volume, of wetting agent
2%, by solids volume, of fumed silica
2%, by solids volume, of modified polyethylene wax
36%, by solids volume, of cuprous oxide
in an amount of 5% by solids volume, and when tested in the Rotor Test for four months (as described herein) shows a decrease with respect to "Size of cracks", "Density of cracking", "Flaked area" or "Size of flaking" of at least 1 Ranking Value Unit, preferably at least 2 Ranking Value Units, such as at least 3 Ranking value Units, when compared to an identical test performed on the paint without fibres.

## Patentansprüche

1. Selbstglättende Marine-Antifouling-Anstrichzusammensetzung, umfassend
i) mindestens ein Binder-Copolymer, umfassend mindestens eine Seitenkette, die mindestens eine Endgruppe der Formel I trägt, 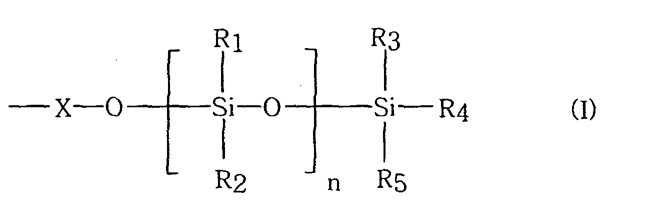 worin R₁, R₂, R₃, R₄ und R₅ jeder unabhängig aus der Gruppe, bestehend aus gegebenenfalls substituiertem C₁₋₂₀-Alkyl, gegebenenfalls substituiertem C₁₋₂₀-Alkoxy, gegebenenfalls substituiertem Aryl, und gegebenenfalls substituiertem Aryloxy ausgewählt sind, X >C(=O) ist und n 0 ist oder eine ganze Zahl von 1 oder mehr ist, und
ii) Fasern.

2. Selbstglättende Marine-Antifouling-Anstrichzusammensetzung gemäß Anspruch 1, worin die Endgruppe die allgemeine Formel II aufweist, 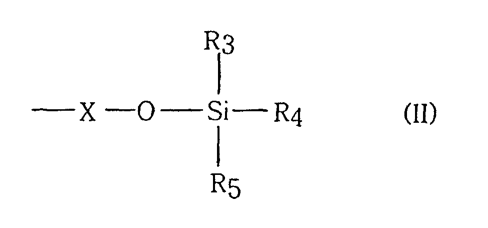 worin X, R₃, R₄ und R₅ wie in Anspruch 1 definiert sind.

3. Selbstglättende Marine-Antifouling-Anstrichzusammensetzung gemäß Anspruch 1 oder 2, worin R₁, R₂, R₃, R₄ und R₅ jeder unabhängig aus der Gruppe, bestehend aus C₁₋₂₀-Alkyl, C₁₋₂₀-Alkoxy, gegebenenfalls substituiertem Phenyl, gegebenenfalls substituiertem Phenoxy und gegebenenfalls substituiertem Naphthyl, ausgewählt sind.

4. Selbstglättende Marine-Antifouling-Anstrichzusammensetzung gemäß einem der voranstehenden Ansprüche, worin die Triorganosilylgruppe -Si(R₃)(R₄)(R₅) aus der Gruppe, bestehend aus Trimethylsilyl, Triethylsilyl, Tri-n-propylsilyl, Tri-n-butylsilyl, Tri-*iso*-propylsilyl, Tri-n-pentylsilyl, Tri-n-hexylsilyl, Tri-n-octylsilyl, Tri-n-dodecylsilyl, Triphenylsilyl, Tri-p-methylphenylsilyl, Tribenzylsilyl, Tri-2-methylisopropylsilyl, Tri-*tert*-butylsilyl, Ethyldimethylsilyl, n-Butyldimethylsilyl, Di-*iso*-propyl-n-butylsilyl, n-Octyl-di-nbutylsilyl, Di-*iso*-propyloctadecylsilyl, Dicyclohexylphenylphenylsilyl, *tert*-Butyldiphenylsilyl, Dodecyldiphenylsilyl und Diphenylmethylsilyl, ausgewählt ist.

5. Selbstglättende Marine-Antifouling-Anstrichzusammensetzung gemäß Anspruch 4, worin die Triorganosilylgruppe aus der Gruppe, bestehend aus Tri-n-butylsilyl, Tri-*tert*-butylsilyl, Triphenylsilyl, Phenyldimethylsilyl, Diphenylmethylsilyl, Tri-*iso*-propylsilyl und Trimethylsilyl, ausgewählt ist.

6. Selbstglättende Marine-Antifouling-Anstrichzusammensetzung gemäß Anspruch 5, worin die Triorganosilylgruppe Tri-*iso*-propylsilyl ist.

7. Selbstglättende Marine-Antifouling-Anstrichzusammensetzung gemäß einem der voranstehenden Ansprüche, worin das Binder-Copolymer aus der Gruppe, bestehend aus Acrylcopolymeren, Methacrylcopolymeren, Maleincopolymeren, Fumarcopolymeren, Itaconcopolymeren, Citraconcopolymeren und Mischungen davon, ausgewählt ist.

8. Marine-Antifouling-Anstrichzusammensetzung gemäß Anspruch 7, worin das Binder-Copolymer aus der Gruppe, bestehend aus Acrylcopolymeren, Methacrylcopolymeren und Mischungen davon, ausgewählt ist.

9. Marine-Antifouling-Anstrichzusammensetzung gemäß den Ansprüchen 7 und 8, worin das Acrylcopolymer oder das Methacrylcopolymer Comonomereinheiten umfassen, die aus der Gruppe, bestehend aus Methylmethacrylat, Methoxyethylmethacrylat und Mischungen davon, ausgewählt sind.

10. Marine-Antifouling-Anstrichzusammensetzung gemäß einem der voranstehenden Ansprüche, worin das Copolymer Monomereinheiten mit einer Endgruppe der allgemeinen Formel II, wie sie in Anspruch 2 definiert ist, in Kombination mit einem zweiten Monomer B, ausgewählt aus Methoxyethyl(meth)acrylat, Ethoxyethyl(meth)acrylat, Propoxyethyl(meth)acrylat, Butoxyethyl(meth)acrylat, Hexoxyethyl(meth)acrylat, Methoxydiethylenglycol(meth)acrylat, Methoxytriethylenglycol(meth)acrylat, Ethoxydiethylenglycol(meth)acrylat und Ethoxytriethylenglycol(meth)acrylat, umfasst.

11. Marine-Antifouling-Anstrichzusammensetzung gemäß einem der voranstehenden Ansprüche, worin das gewichtsgemittelte Molekulargewicht des Copolymers im Bereich von 1.000 - 1.500.000, wie etwa im Bereich von 5.000 - 1.000.000, bevorzugt im Bereich von 5.000 - 500.000, beispielsweise im Bereich von 5.000 - 100.000, liegt.

12. Marine-Antifouling-Anstrichzusammensetzung gemäß einem der voranstehenden Ansprüche, worin die Fasern in dem Anstrich in einer Menge von 3 - 8 Feststoff-Vol.% vorhanden sind.

13. Marine-Antifouling-Anstrichzusammensetzung gemäß einem der voranstehenden Ansprüche, welche zusätzlich mindestens ein biologisch aktives Mittel umfasst.

14. Marine-Antifouling-Anstrichzusammensetzung gemäß einem der voranstehenden Ansprüche, welche zusätzlich mindestens ein Pigment, mindestens eine Farbe, mindestens ein Additiv und/oder mindestens ein Lösungsmittel umfasst.

15. Marine-Antifouling-Anstrichzusammensetzung gemäß einem der voranstehenden Ansprüche, welche,
i) wenn in dem Rotortest für zwei Monate getestet (wie hierin beschrieben), bezüglich der "Rissdichte", der "Rissgröße", des "abgeblätterten Bereichs" oder der "Größe der Abblätterung" eine Abnahme um mindestens eine klassifizierende Werteinheit, bevorzugt um mindestens zwei klassifizierende Werteinheiten, wie etwa um mindestens drei klassifizierende Werteinheiten, im Vergleich zu einem identischen Test, der auf dem Anstrich ohne Fasern durchgeführt wird, zeigt
oder,
ii) wenn in dem Blasenboxtest (wie hierin beschrieben) für 8 Monate getestet, eine Abnahme bezüglich der "Rissdichte", der "Rissgröße", des "abgeblätterten Bereichs" oder der "Größe der Abblätterung" um mindestens eine klassifizierende Werteinheit, bevorzugt um mindestens zwei klassifizierende Werteinheiten, wie etwa um mindestens drei klassifizierende Werteinheiten, im Vergleich zu einem identischen Test, der auf dem Anstrich ohne Fasern durchgeführt wird, zeigt.

16. Marine-Antifouling-Anstrichzusammensetzung gemäß einem der voranstehenden Ansprüche, welche, wenn in dem Rotortest für vier Monate (wie hierin beschrieben) getestet, eine Abnahme bezüglich der "Rissdichte", der "Rissgröße", des "abgeblätterten Bereichs" oder der "Größe der Abblätterung" um mindestens eine klassifizierende Werteinheit, bevorzugt um mindestens zwei klassifizierende Werteinheiten, wie etwa um mindestens drei klassifizierende Werteinheiten, im Vergleich zu einem identischen Test, der auf dem Anstrich ohne Fasern durchgeführt wird, zeigt.

17. Marine-Antifouling-Anstrichzusammensetzung gemäß einem der voranstehenden Ansprüche, welche,
i) wenn in dem Rotortest für zwei Monate (wie hierin beschrieben) getestet, einen klassifizierenden Wert von höchstens 1, bevorzugt 0, bezüglich der "Rissgröße" oder der "Rissdichte" zeigt
oder,
ii) wenn in dem Rotortest für zwei Monate (wie hierin beschrieben) getestet, einen klassifizierenden Wert von höchstens 1, bevorzugt 0, bezüglich des "abgeblätterten Bereichs" oder der "Größe der Abblätterung" zeigt
oder,
iii) wenn in dem Blasenboxtest (wie hierin beschrieben) für 8 Monate getestet, einen klassifizierenden Wert von höchstens 1, bevorzugt 0, bezüglich der "Rissgröße" oder der "Rissdichte" zeigt
oder,
iv) wenn in dem Blasenboxtest (wie hierin beschrieben) für 8 Monate getestet, einen klassifizierenden Wert von höchstens 1, bevorzugt 0, bezüglich des "abgeblätterten Bereichs" oder der "Größe der Abblätterung" zeigt.

18. Marine-Antifouling-Anstrichzusammensetzung gemäß einem der voranstehenden Ansprüche, welche,
i) wenn in dem Rotortest für 4 Monate (wie hierin beschrieben) getestet, einen klassifizierenden Wert von höchstens 1, bevorzugt 0, bezüglich der "Rissgröße" oder der "Rissdichte" zeigt
oder,
ii) wenn in dem Rotortest für 4 Monate (wie hierin beschrieben) getestet, einen klassifizierenden Wert von höchstens 1, bevorzugt 0, bezüglich des "abgeblätterten Bereichs" oder der "Größe der Abblätterung" zeigt.

19. Marine-Antifouling-Anstrichzusammensetzung gemäß einem der voranstehenden Ansprüche, wobei die Fasern solche Fasern sind, dass, wenn in die Modellanstrichzusammensetzung A
58 Feststoff-Vol.-% eines Copolymers wie hierin beschrieben
2 Feststoff-Vol.-% vom Netzmittel
2 Feststoff-Vol.-% von Quarzstaub
2 Feststoff-Vol.-% von modifiziertem Polyethylenwachs
36 Feststoff-Vol.-% von Kupfer(I)-Oxid
in einer Menge von 5 Feststoff-Vol.-% eingebracht, die Zusammensetzung,
i) wenn im Rotortest für zwei Monate (wie hierin beschrieben) getestet, eine Abnahme bezüglich der "Rissgröße", der "Rissdichte", des "abgeblätterten Bereichs" oder der "Größe der Abblätterung" um mindestens eine klassifizierende Werteinheit, bevorzugt um mindestens zwei klassifizierende Werteinheiten, wie etwa um mindestens drei klassifizierende Werteinheiten, im Vergleich zu einem identischen Test, der mit einem Anstrich ohne Fasern durchgeführt wird, zeigt
oder,
ii) wenn in dem Blasenboxtest (wie hierin beschrieben) getestet, eine Abnahme bezüglich der "Rissgröße", die "Rissdichte", des "abgeblätterten Bereichs" oder der "Größe der Abblätterung" um mindestens eine klassifizierende Werteinheit, bevorzugt um mindestens zwei klassifizierende Werteinheiten, wie etwa um mindestens drei klassifizierende Werteinheiten, im Vergleich zu einem identischen Test, der auf dem Anstrich ohne Fasern durchgeführt wird, zeigt.

20. Marine-Antifouling-Anstrichzusammensetzung gemäß einem der voranstehenden Ansprüche, wobei die Fasern solche Fasern sind, dass, wenn in die Modellanstrichzusammensetzung A
58 Feststoff-Vol.-% eines Copolymers wie hierin beschrieben,
2 Feststoff-Vol.-% von Netzmittel
2 Feststoff-Vol.-% von Quarzstaub
2 Feststoff-Vol.-% von modifiziertem Polyethylenwachs
36 Feststoff-Vol.-% von Kupfer(I)-Oxid
in einer Menge von 5 Feststoffvol.-% eingebracht, die Zusammensetzung, wenn im Rotortest für 4 Monate (wie hierin beschrieben) getestet, eine Abnahme bezüglich der "Rissgröße", der "Rissdichte", des "abgeblätterten Bereichs" oder der "Größe der Abblätterung" um mindestens eine klassifizierende Werteinheit, bevorzugt um mindestens zwei klassifizierende Werteinheiten, wie etwa um mindestens drei klassifizierende Werteinheiten, im Vergleich mit einem identischen Test, der auf dem Anstrich ohne Fasern durchgeführt wird, zeigt.

## Revendications

1. Composition de peinture antisalissure marine autopolissante comprenant :
i) au moins un copolymère de liaison comprenant au moins une chaîne latérale portant au moins un groupe terminal de formule I 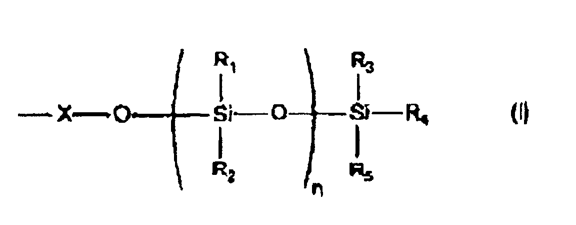 dans laquelle R₁, R₂, R₃, R₄ et R₅ sont choisis chacun indépendamment dans le groupe comprenant un alkyle en C₁₋₂₀ éventuellement substitué, un alkoxy en C₁₋₂₀ éventuellement substitué, un aryle éventuellement substitué et un aryloxy éventuellement substitué ; X est >C(=O) ; et n est 0 ou un entier supérieur ou égal à 1 ; et
ii) des fibres.

2. Composition de peinture antisalissure marine autopolissante selon la revendication 1, dans laquelle le groupe terminal a la formule générale II 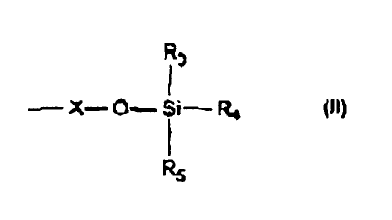 dans laquelle X, R₃, R₄ et R₅ sont tels que définis dans la revendication 1.

3. Composition de peinture antisalissure marine autopolissante selon la revendication 1 ou 2, dans laquelle R₁, R₂, R₃, R₄ et R₅ sont choisis chacun indépendamment dans le groupe comprenant un alkyle en C₁₋₂₀, un alkoxy en C₁₋₂₀, un phényle éventuellement substitué, un phénoxy éventuellement substitué, et un naphtyle éventuellement substitué.

4. Composition de peinture antisalissure marine autopolissante selon l'une quelconque des revendications précédentes, dans laquelle le groupe triorganosilylé, -Si(R₃)(R₄)(R₅), est choisi dans le groupe comprenant le triméthylsilyle, triéthylsilyle, tri-n-propylsilyle, tri-n-butylsilyle, tri-iso-propylsilyle, tri-n-pentylsilyle, tri-n-hexylsylile, tri-n-octylsilyle , tri-n-dodecylsilyle, triphénylsilyle, tri-p-méthylphénylsilyle, tribenzylsilyle, tri-2-méthylisopropylsilyle, tri-tert-butylsilyle, éthyldiméthylsilyle, n-butyldiméthylsilyle, di-iso-propyl-n-butylsilyle, n-octyl-di-n-butylsilyle, di-iso-propyloctadécyl-silyle, dicyclohexylphénylphényl-silyle, tert-butyldiphényl-silyle, dodécyldiphénylsilyle et diphénylméthylsilyle.

5. Composition de peinture antisalissure marine autopolissante selon la revendication 4, dans laquelle le groupe triorganosilylé est choisi dans le groupe comprenant le tri-n-butylsilyle, tri-tert-butylsilyle, triphénylsilyle, phényldiméthyl-silyle, diphénylméthylsilyle, tri-iso-propylsilyle et trimétylsilyle.

6. Composition de peinture antisalissure marine autopolissante selon la revendication 5, dans laquelle le groupe triorganosilylé est le tri-iso-propylsilyle.

7. Composition de peinture antisalissure marine autopolissante selon l'une quelconque des revendications précédentes, dans laquelle le copolymère de liaison est choisi dans le groupe comprenant des copolymères acryliques, des copolymères méthacryliques, des copolymères maléiques, des copolymères fumariques, des copolymères itaconiques, des copolymères citraconiques et des mélanges de ceux-ci.

8. Composition de peinture antisalissure marine selon la revendication 7, dans laquelle le copolymère de liaison est choisi dans le groupe comprenant des copolymères acryliques, des copolymères méthacryliques, et des mélanges de ceux-ci.

9. Composition de peinture antisalissure marine selon les revendications 7 et 8, dans laquelle le copolymère acrylique et le copolymère méthacrylique comprennent des unités co-monomères choisies dans le groupe comprenant le méthacrylate de méthyle, le méthacrylate de méthoxyéthyle et les mélanges de ceux-ci.

10. Composition de peinture antisalissure marine selon l'une quelconque des revendications précédentes, dans laquelle le copolymère comprend des unités monomères avec un groupe terminal de formule générale II telle que définie dans la revendication 2 en combinaison avec un second monomère B choisi parmi le (méth)acrylate de méthoxyéthyle, (méth)acrylate d' éthoxyéthyle, (méth)acrylate de propoxyéthyle, (méth)acrylate de butoxyéthyle, (méth)acrylate de hexoxyéthyle, (méth)acrylate de méthoxydiéthylène glycol, (méth)acrylate de méthoxytriéthylène glycol, (méth)acrylate de éthoxydiéthylène glycol, et (méth)acrylate de éthoxytriéthylène glycol.

11. Composition de peinture antisalissure marine selon l'une quelconque des revendications précédentes, dans laquelle la masse moléculaire moyenne du copolymère est comprise dans la plage allant de 1000 à 1500000, telle que la plage allant de 5000 à 1000000, de préférence dans la plage allant de 5000 à 500000, par exemple dans la plage allant de 5000 à 100000.

12. Composition de peinture antisalissure marine selon l'une quelconque des revendications précédentes, dans laquelle les fibres sont présentes dans la peinture dans une quantité de 3 à 8% en volume de solides.

13. Composition de peinture antisalissure marine selon l'une quelconque des revendications précédentes, qui comprend en outre au moins un agent biologiquement actif.

14. Composition de peinture antisalissure marine selon l'une quelconque des revendications précédentes, qui comprend en outre au moins un pigment, au moins un colorant, au moins un additif et/ou au moins un solvant.

15. Composition de peinture antisalissure marine selon l'une quelconque des revendications précédentes qui
i) lorsque testée dans le Test de Rotor pendant deux mois (tel que décrit ici) présente une diminution en ce qui concerne la « Densité de craquelage », la « Taille des craquelures », la « Surface des écailles » ou la « Taille d'écaillage » d'au moins 1 Unité de Valeur de Classement, de préférence au moins 2 Unités de Valeur de Classement, telle que au moins 3 Unités de Valeur de Classement, quand comparée à un test identique effectué sur une peinture sans fibres ;
ou
ii) lorsque testée dans le Test de l'Appareil de Cloquage (tel que décrit ici) pendant 8 mois présence une diminution en ce qui concerne la « Densité de craquelage », la « Taille des craquelures », la « Surface des écailles » ou la « Taille d'écaillage » d'au moins 1 Unité de Valeur de Classement, de préférence au moins 2 Unités de Valeur de Classement, telle que au moins 3 Unités de Valeur de Classement, quand comparée à un test identique effectué sur une peinture sans fibres.

16. Composition de peinture antisalissure marine selon l'une quelconque des revendications précédentes qui, lorsque testée dans le Test de Rotor pendant quatre mois (tel que décrit ici), présente une diminution en ce qui concerne la « Densité de craquelage », la « Taille des craquelures », la « Surface des écailles » ou la « Taille d'écaillage » d'au moins 1 Unité de Valeur de Classement, de préférence au moins 2 Unités de Valeur de Classement, telle que au moins 3 Unités de Valeur de Classement, quand comparée à un test identique effectué sur une peinture sans fibres.

17. Composition de peinture antisalissure marine selon l'une quelconque des revendications précédentes, qui
i) lorsque testée dans le Test de Rotor pendant deux mois (tel que décrit ici) présente une Valeur de Classement en ce qui concerne la « Taille des craquelures » ou la « Densité de craquelage » d'au plus 1, de préférence 0 ;
ou
ii) lorsque testée dans le Test de Rotor pendant deux mois (tel que décrit ici) présente une Valeur de Classement en ce qui concerne la « Surface des écailles » ou la « Taille d'écaillage » d'au plus 1, de préférence 0 ;
ou
iii) lorsque testée dans le Test de l'Appareil de Cloquage (tel que décrit ici) pendant 8 mois présente une Valeur de Classement en ce qui concerne la « Taille des craquelures » ou la « Densité de craquelage » d'au plus 1, de préférence 0 ;
ou
iv) lorsque testée dans le Test de l'Appareil de Cloquage (tel que décrit ici) pendant 8 mois présente une Valeur de Classement en ce qui concerne la « Surface des écailles » ou la « Taille d'écaillage » d'au plus 1, de préférence 0.

18. Composition de peinture antisalissure marine selon l'une quelconque des revendications précédentes, qui
i) lorsque testée dans le Test de Rotor pendant quatre mois (tel que décrit ici) présente une Valeur de Classement en ce qui concerne la « Taille des craquelures » ou la « Densité de craquelage » d'au plus 1, de préférence 0 ;
ou
ii) lorsque testée dans le Test de Rotor pendant quatre mois (tel que décrit ici) présente une valeur de Classement en ce qui concerne la « Surface des écailles » ou la « Taille d'écaillage » d'au plus 1, de préférence 0.

19. Composition de peinture antisalissure marine selon l'une quelconque des revendications précédentes, où les fibres sont telles que, lorsque incorporées dans la Composition de Peinture de Référence A
58%, en volume de solides, d'un copolymère tel que décrit ici
2%, en volume de solides, d'agent humidifiant
2%, en volume de solides, de silice fumée
2%, en volume de solides, de cire polyéthylène modifiée
36%, en volume de solides, d'oxyde cuivreux
dans une quantité de 5% en volume de solides, et
i) lorsque testée dans le Test de Rotor pendant deux mois (tel que décrit ici) présente une diminution en ce qui concerne la « Taille des craquelures », la « Densité de craquelage », la « Surface des écailles » ou la « Taille d'écaillage » d'au moins 1 Unité de Valeur de Classement, de préférence au moins 2 Unités de Valeur de Classement, telle que au moins 3 Unités de Valeur de Classement, quand comparée à un test identique effectué sur une peinture sans fibres ;
ou
ii) lorsque testée dans le Test de l'Appareil de Cloquage (tel que décrit ici) présente une diminution en ce qui concerne la « Taille des craquelures », la « Densité de craquelage », la « Surface des écailles » ou la « Taille d'écaillage » d'au moins 1 Unité de Valeur de Classement, de préférence au moins 2 Unités de Valeur, de Classement, telle que au moins 3 Unités de Valeur de Classement, quand comparée à un Lest identique effectué sur une peinture sans fibres.

20. Composition de peinture antisalissure marine selon l'une quelconque des revendications précédentes, où les fibres sont telles que, lorsque incorporées dans la Composition de Peinture de Référence A
58%, en volume de solides, d'un copolymère tel que décrit ici
2%, en volume de solides, d'agent humidifiant
2%, en volume de solides, de silice fumée
2%, en volume de solides, de cire polyéthylène modifiée
36%, en volume de solides, d'oxyde cuivreux
dans une quantité de 5% en volume de solides, et lorsque testée dans le Test de Rotor pendant quatre mois (tel que décrit ici) présente une diminution en ce qui concerne la « Taille des craquelures », la « Densité de craquelage », la « Surface des écailles » ou la « Taille d'écaillage » d'au moins 1 Unité de Valeur de Classement, de préférence au moins 2 Unités de Valeur de Classement, telle que au moins 3 Unités de Valeur de Classement, quand comparée à un test identique effectué sur une peinture sans fibres.
